# EUROPÄISCHE PATENTSCHRIFT

(11) **EP 4 450 961 B1**
(45) Veröffentlichungstag und Bekanntmachung des Hinweises auf die Patenterteilung: **05.08.2026**
(21) Anmeldenummer: 24168074.3
(22) Anmeldetag: 02.04.2024
(51) Int. Cl.: G01N 25/72

(54) **ANLAGE UND VERFAHREN ZUR PRÜFUNG DER QUALITÄT VON FAHRRADKOMPONENTEN**
SYSTEM AND METHOD FOR TESTING THE QUALITY OF BICYCLE COMPONENTS
INSTALLATION ET PROCÉDÉ DE CONTRÔLE DE LA QUALITÉ DE COMPOSANTS DE BICYCLETTE

(30) Priorität: 18.04.2023 DE 102023109697
(43) Veröffentlichungstag der Anmeldung: 23.10.2024
(73) Patentinhaber: DT Swiss AG, 2504 Biel (CH)
(72) Erfinder: Henig, Andreas, 2504 Biel (CH); Witschi, Christophe, CH-2803 Bourrignon (CH); Walthert, Martin, CH-3270 Aarberg (CH); Dillenz, Alexander, D-70565 Stuttgart (DE)
(74) Vertreter: BSB Patentanwälte Schütte & Engelen Partnerschaft mbB

(56) Entgegenhaltungen:
- EP-A2- 2 386 850
- DE-B4- 102012 101 467
- US-B2- 6 570 175
- USAMENTIAGA RUBÉN ET AL: "Nondestructive Evaluation of Carbon Fiber Bicycle Frames Using Infrared Thermography", SENSORS, ARTICLE 2679, vol. 17, no. 11, 20 November 2017 (2017-11-20), pages 1 - 16, XP093066664, DOI: 10.3390/s17112679

## Beschreibung

Die vorliegende Erfindung betrifft eine Anlage, die Verwendung einer Anlage und ein Verfahren zur Überprüfung der Qualität und insbesondere der Fertigungsqualität von als Fahrradfelgen ausgebildeten Fahrradkomponenten.

Besonders eignet sich die Erfindung zur Bewertung der Qualität von z.B. wenigstens teilweise aus Faserverbundwerkstoff gefertigten Fahrradkomponenten und vorzugsweise von Fahrradfelgen.

Die EP 2 386 850 A2, US 6 570 175 B2 und die DE 10 2012 101467 B4 zeigen Vorrichtungen zur thermografischen Prüfung von Bauteilen auf Defekte. Der Artikel "Nondestructive Evaluation of Carbon Fiber Bicycle Frames Using Infrared Thermography", Sensors, Article 2679, Bd. 17, Nr. 11 vom 20.11.2017 offenbart die Anwendung von Thermographie an Fahrradrahmen.

Fahrradkomponenten, die wenigstens zum Teil aus einem Faserverbundwerkstoff gefertigt werden, werden oftmals in einem aufwendigen Herstellverfahren mit vielen manuellen Schritten hergestellt. Dabei werden zum Beispiel trockene Gewebelagen oder sogenannte Prepregs in einer Form manuell Lage für Lage eingelegt. Dabei wird eine entsprechende Anzahl von Abschnitten so drapiert, dass das gewünschte Lagenbild entsteht. Meist wird die Form verschlossen und in einer temperierten Einrichtung aufgeheizt, sodass die Fahrradkomponente mit dem gewünschten Komponentenkörper entsteht.

Bei teilweise oder vollständig manuell oder auch automatisiert gefertigten Fahrradkomponenten ist es wünschenswert, die Fertigungsqualität der hergestellten Fahrradkomponenten zu überprüfen. Dazu wird bislang regelmäßig eine optische Kontrolle der einzelnen Fahrradkomponenten durchgeführt und es werden Fahrradkomponenten aussortiert, die von außen sichtbare Defekte aufweisen. Zusätzlich kann in bestimmten Abständen eine derart hergestellte Fahrradkomponente beispielsweise aufgesägt und die innere Struktur der Fahrradkomponente überprüft werden. Dabei können systematische Fehler bei der Herstellung aufgedeckt werden. Nachteilig ist aber, dass keine kontinuierliche Kontrolle erfolgt, sodass Fehler im Einzelfall nicht detektierbar sind bzw. nur zufällig erkannt werden können.

Um die innere Struktur einer Fahrradkomponente beurteilen zu können, ist es möglich, die Fahrradkomponente durch Röntgen oder durch Computertomografie (CT) zerstörungsfrei zu untersuchen. Dadurch kann die innere Struktur der hergestellten Bauteile zuverlässig überprüft werden. Nachteilig ist aber der erhebliche finanzielle Aufwand und der Zeitbedarf, da die vollständige Untersuchung zum Beispiel einer Fahrradfelge schnell mehr als einen Arbeitstag an Zeit benötigen kann. Deshalb ist ein solches Röntgenverfahren an sich zwar sehr vorteilhaft und ermöglicht grundsätzlich die Kontrolle und die Überprüfung der Fertigungsqualität von einzelnen Bauteilen, die stichprobenartig aus der Serie entnommen oder bei der Entwicklung eines Prototypen untersucht werden. Dadurch kann z.B. bei Fahrradkomponenten aus Faserverbundwerkstoff grundsätzlich eine Optimierung hinsichtlich des Lagenbilds erfolgen. Eine weitergehende Kontrolle ist aber zu aufwendig.

Bei der Serienkontrolle ist es möglich, neben einer optischen Überprüfung von Oberflächendefekten auch das Gewicht der einzelnen Fahrradkomponenten zu erfassen, um Abweichungen von dem Sollwert zu detektieren. Darüber können fehlerhafte Fahrradkomponenten aussortiert werden. Ebenso kann eine Erfassung der Abmessungen durchgeführt werden und es kann ein Vergleich mit den Sollwerten erfolgen, um die Serienqualität zu überprüfen.

Aus der DE 10 2016 212 810 B4 ist ein Verfahren und ein Messsystem für die Prüfung von Bauteilen im Automobilbau bekannt geworden, wobei durch aktive Thermografie ein Karosseriebauteil mit einem Infrarot-Erreger über Wärmestrahlung angeregt wird. Die spektrale Verteilung der Wärmestrahlung des Infrarot-Erregers wird gleichzeitig bei der Erwärmung über einen flächenbündig in einer Ausnehmung des Bauteils aufgenommenen zusätzlichen Sensor erfasst, um die spektrale Zusammensetzung der Wärmestrahlung des Infrarot-Erregers bei der Auswertung zur berücksichtigen. Das Verfahren funktioniert grundsätzlich, erfordert aber durch die zusätzlichen Sensoren einen erhöhten Aufwand. Komplexe Karosseriebauteil müssen von mehreren Seiten untersucht werden, was den Aufwand weiter erhöht.

Es ist aber wünschenswert, die Qualität von Fahrradkomponenten mit geringem Aufwand zuverlässig in hoher Qualität zu überprüfen.

Diese Aufgabe wird gelöst durch eine Anlage mit den Merkmalen des Anspruchs 1 und durch ein Verfahren zum Überprüfen der Fertigungsqualität von Fahrradkomponenten mit den Merkmalen des Anspruchs 9 und durch eine Fahrradkomponente, die mit dem Verfahren überprüft wurde. Bevorzugte Weiterbildungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Anlage dient zur Überprüfung der Qualität und insbesondere der Fertigungsqualität von Fahrradkomponenten und besonders bevorzugt von Fahrradfelgen. Die Anlage umfasst wenigstens eine Steuereinrichtung und wenigstens eine Wärmequelle und wenigstens eine Kamera und vorzugsweise wenigstens eine Wärmebildkamera. Die Wärmequelle ist dazu ausgebildet und eingerichtet, während eines Messvorgangs wenigstens einen Abschnitt der Fahrradkomponente oder eines Komponentenkörpers der Fahrradkomponente (zeitlich gesteuert) mit Wärme zu beaufschlagen bzw. zu versorgen. Die Kamera bzw. Wärmebildkamera ist dazu eingerichtet und ausgebildet, wenigstens ein ortsaufgelöstes Wärmebild wenigstens eines Teilbereichs des Abschnitts der Fahrradkomponente zu erfassen und auszuwerten, um durch Analyse des Wärmebildes die Fertigungsqualität der Fahrradkomponente zu bestimmen bzw. ein Maß dafür zu ermitteln. Die Anlage ist dazu eingerichtet und ausgebildet, die Fertigungsqualität von Fahrradfelgen zu untersuchen und wenigstens die Seitenflächen der Fahrradfelgen vollständig zu erfassen. Dabei ist wenigstens eine Umlenkeinrichtung umfasst, welche dazu ausgebildet ist, Wärmestrahlung umzulenken, um verschiedene Seiten der Fahrradkomponente simultan zu erfassen. Unter "simultan" wird im Rahmen dieser Anmeldung "gleichzeitig" oder doch wenigstens nahezu gleichzeitig verstanden. Das ermöglicht es, auch simultan eine Seite oder einen Teilbereich von der Fahrradkomponente zu erfassen, die von der Lichtquelle bzw. der Wärmequelle abgewandt ist. Und/oder einen Teilbereich zu erfassen, der nicht auf direktem Weg erwärmt, angestrahlt oder erfasst werden kann.

Die erfindungsgemäße Anlage hat viele Vorteile. Ein erheblicher Vorteil der erfindungsgemäßen Anlage besteht darin, dass über ein zerstörungsfreies Aufbringen von Wärme durch wenigstens eine Wärmequelle bzw. durch gezieltes Entziehen von Wärme und ein entsprechendes Anfertigen eines ortsaufgelösten Wärmebildes eine ortsaufgelöste Erfassung und Analyse der Fahrradkomponente möglich ist. Damit kann zerstörungsfrei die Fertigungsqualität der Fahrradkomponente bestimmt werden. Und das kann nicht nur von einer Seite oder Richtung erfolgen.

Somit ist es grundsätzlich möglich, die Anlage nicht nur zur Überprüfung der Fertigungsqualität einzelner Fahrradkomponenten aus einer Serie von Fahrradkomponenten zu verwenden, sondern es ist auch möglich, die Fertigungsqualität eines Großteils oder sogar einer vollständigen Serie von Fahrradkomponenten zu erfassen. Dabei können die somit überprüften Fahrradkomponenten anschließend mit größerer Sicherheit eingesetzt werden, da die Qualität (gegebenenfalls aller Bauteile einer Serie) zerstörungsfrei ermittelt wurde.

In allen Ausgestaltungen ist es dabei möglich, dass zur Erfassung eines Wärmebildes eine (spezielle) Wärmebildkamera eingesetzt wird. Möglich ist es aber auch, dass eine konventionelle Kamera eingesetzt wird, die beispielsweise über den Einsatz von Filtern und/oder über den Einsatz spezieller Wärmequellen dazu eingerichtet und ausgebildet ist, ortsaufgelöst ein Wärmebild wenigstens eines Teilbereichs eines Abschnitts der Fahrradkomponente zu erfassen und auszuwerten. Ortsaufgelöst kann dabei insbesondere bedeuten, dass das Wärmebild in Zeilen und/oder Spalten aufgelöst vorliegt. Möglich ist aber zum Beispiel auch eine vektorielle Darstellung oder eine Angabe über Winkel und Entfernung, um ortsaufgelöst ein Wärmebild zu definieren.

Vorzugsweise ist die Kamera als Wärmebildkamera oder als Infrarotbildkamera ausgeführt. Besonders bevorzugt gibt das Wärmebild ortsaufgelöst die Wärmeverteilung (in dem Abschnitt) der Fahrradkomponente oder eines Komponentenkörpers der Fahrradkomponente wieder. Dabei wird insbesondere die Intensität und/oder die Farbe der Bildpunkte wie zum Beispiel der RGB-Werte abhängig von der lokalen Temperatur des Punktes auf der Fahrradkomponente, den der Bildpunkt repräsentiert. Damit ist es möglich, ein Abbild der Temperaturverteilung der Fahrradkomponente zu erzeugen. Dadurch, dass bei einem definierten Wärmeeintrag die resultierende Temperatur von der Materialstärke abhängt, kann somit auf die lokale Materialstärke zurückgeschlossen werden. Dickere Schichten und größere Massen erwärmen sich langsamer. Materialien mit größerer spezifischer Wärmekapazität erwärmen sich auch langsamer. Hohlräume wirken als Isolator und reduzieren die Wärmeleitung und damit Wärmeverteilung im Körper. Damit gibt ein Wärmebild gleichzeitig auch ein Abbild der Verteilung der Materialstärken und der Materialverteilung wieder. Auffällige Stellen können auf Lufteinschlüsse oder fehlenden oder überschüssigen Materialeintrag hinweisen.

Gegenüber der Anfertigung von Röntgenbildern weist die Anlage und das damit durchgeführte Verfahren viele Vorteile auf. Beim Röntgen an sich entsteht zwar zeitlich ein ähnlicher Aufwand, aber es entsteht ein zweidimensionales Bild, welches Überlagerungen aufzeigt. Es ist nicht ersichtlich in welcher Tiefe eine markante Stelle oder ein Defekt vorliegt. Es ist auch nicht klar, auf welcher Körperseite eine solche markante Stelle vorliegt, da z.B. bei der Untersuchung von Fahrradfelgen beide Felgenseiten auf dem Röntgenbild abgelichtet sind. Zudem ist eine Röntgenanlage erheblich teurer und erfordert Sicherheitsmaßnahmen im Betrieb.

Gegenüber der Computertomographie (CT), die auch ein sehr genaues Verfahren ist, bestehen auch erhebliche Vorteile. Bei einem CT werden einzelne Schichtbilder vom Querschnitt erzeugt. Das erfordert einen sehr hohen Zeitaufwand. Schon für eine einzige Fahrradfelge werden mehrere Stunden benötigt. Da die Fahrradfelge überall an ihrem Komponentenkörper Defekte aufweisen kann, ist diese Methode nicht so gut geeignet und zudem noch teurer und es fallen viel mehr Daten an, deren Archivierung ebenfalls Aufwand erzeugt.

Mit der erfindungsgemäßen Anlage kann eine sehr genaue Aussage über die Qualität einer Fahrradkomponente und deren Komponentenkörper getroffen werden. Es kann auch festgestellt werden, in welcher Tiefe eine Auffälligkeit oder ein Defekt ist. Luft wirkt auf den Wärmebildern regelmäßig als Isolator, sodass bei Fahrradfelgen keine Überlagerung der gegenüberliegenden Felgenseiten auftritt. Die reine Messzeit bei der Analyse von Fahrradfelgen kann in einer einfachen Ausgestaltung weniger als drei Minuten oder auch weniger als zwei Minuten oder eine Minute oder noch weniger betragen. Dabei kann mittels der Umlenkeinrichtung direkt auch die Rückseite mit einer einzigen Aufnahme aufgenommen und analysiert werden. Das führt zu einer erheblichen Zeitersparnis. Außerdem erhöht das auch die Sicherheit und Qualität, da beide Seiten mit der gleichen Aufnahme unter gleichen Bedingungen analysiert werden.

Mit einer "Felge" wird im Folgenden im Rahmen dieser Anmeldung eine "Fahrradfelge" bezeichnet. Besonders bevorzugt wird damit eine Hohlkammerfelge bezeichnet, die radial innen einen Felgenboden und zwei seitliche Felgenflanken aufweist, die radial weiter außen durch ein Felgenbett miteinander verbunden werden.

Der Felgenboden kann dabei durch die radial inneren Abschnitte oder Bereich der Felgenflanken gebildet werden. Zwischen den Felgenflanken (und dem Felgenboden) und dem Felgenbett ist insbesondere wenigstens eine Hohlkammer vorgesehen. Regelmäßig weist der Felgenboden Speichenlöcher und vorzugsweise genau ein Ventilloch auf. Das Felgenbett kann (abgesehen von einem Ventilloch) geschlossen ausgebildet sein oder Speichenlöcher bzw. Aufnahmen für Speichennippel aufweisen.

Eine Wärmebildkamera misst grundsätzlich die Infrarotstrahlung und erstellt ein Bild anhand der Oberflächentemperatur. Luft im Komponentenkörper ist dabei ein Isolator und erwärmt sich schlecht. Hier wird die Wärmestrahlung der Oberfläche gemessen. Vorzugsweise wird in einer Recheneinrichtung und z. B. der Steuereinrichtung jedem Punkt auf der Felge ein entsprechender Temperaturwert zugeordnet und z. B. als Farbunterschied wiedergegeben und im Wärmebild gespeichert. Bei unterschiedlichen Materialdicken kommt es aufgrund der unterschiedlichen Wärmekapazitäten zu unterschiedlichen Erwärmungen und daher zu einer inhomogenen Wärmeverteilung, die durch das Wärmebild erfasst wird. Neben Materialstärken wirken sich auch unterschiedliche Materialien auf die Wärmeverteilung in dem Komponentenkörper aus. Auch eine (unerwünschte) Verteilung der Materialarten und Materialstärken kann damit erkannt werden.

Zur Auswertung wird in bevorzugten Ausgestaltungen vorzugsweise (manuell oder automatisiert) ein Vergleich mit einer Referenzkomponente oder einem Referenzbild durchgeführt. Bei Fahrradfelgen kann eine normierte Ausrichtung des Wärmebildes durch z.B. das Ventilloch oder anhand einer anderen markanten Stelle oder einer bewusst markierten Stelle (Aufkleber, Aufdruck, RFID, optisch erkennbare Ecke oder Kante, optisches Muster etc.) erfolgen. Dann kann das Wärmebild entsprechend gedreht werden oder es wird das Referenzbild gedreht, um einen korrekten Vergleich zu ermöglichen.

Fehlerkataloge (in der Steuereinrichtung oder einem zugeordneten Speicher) dienen der Anlage zur Erkennung schlechter Fahrradkomponenten. Ein solcher Fehlerkatalog kann manuell und/oder automatisch ergänzt werden. Eine Hinzufügung von Kriterien/Testkriterien/Abfragemerkmalen kann z.B. erfolgen, wenn bei einem Bauteil später im Betrieb ein Fehler auftritt, der bislang nicht bekannt war. Möglich ist es auch, dass ein Testkriterium (zu dem Fehlerkatalog) manuell oder automatisch hinzugefügt oder wieder entfernt wird, wenn z.B. ein automatisch erkannter Fehler in der manuellen Nachkontrolle als in Ordnung bewertet wird.

In einer bevorzugten Weiterbildung umfasst die Wärmequelle wenigstens eine Strahlungsquelle. Besonders bevorzugt umfasst die Wärmequelle wenigstens eine Wärmestrahlungseinrichtung als Wärmestrahlungsquelle.

Möglich ist es in allen Fällen aber auch, dass Wärmeleistung über die Leitung von Wärme eingebracht wird. Beispielsweise ist es denkbar, eine Fahrradkomponente zunächst homogen in einem Ofen aufzuwärmen, die Fahrradkomponente dann definiert dem Ofen zu entnehmen und nach einem definierten Zeitraum ein Wärmebild davon anzufertigen. Aufgrund der unterschiedlichen Materialstärkenverteilung werden sich einzelne Bereiche der Fahrradkomponente schneller abkühlen als andere Bereiche, sodass über ein Wärmebild auch eine Materialstärkenverteilung ableitbar ist. Besonders bevorzugt wird aber die Fahrradkomponente bzw. wenigstens ein Abschnitt der Fahrradkomponente definiert durch Einbringung einer Wärmeleistung aufgeheizt.

Bevorzugt wird eine Mehrzahl von Wärmequellen und besonders bevorzugt wird eine Mehrzahl von Quarzlampen als Wärmequellen eingesetzt. Denkbar ist aber auch der Einsatz anderer Wärmequellen. So kann auch eine gezielte Erhitzung mit Laserlicht und/oder über Konvektion erfolgen. Quarzlampen eignen sich gut als Wärmequellen, da sie gezielt ansteuerbar sind und effektiv und genau steuerbar sind.

In allen Ausgestaltungen sind die Steuereinrichtung und wenigstens eine Wärmequelle oder alle Wärmequellen dazu eingerichtet und ausgebildet, eine periodisch schwankende bzw. zeitlich gezielt veränderliche Wärmeleistung abzugeben. Dabei entspricht die Wärmeleistung der Intensität der Wärmeabgabe und insbesondere der Intensität der Wärmestrahlung. Die Wärmeleistung kann dabei zeitlich gezielt gesteuert werden und beispielsweise in einem vorbestimmten Frequenzbereich oder bei einer vorbestimmten Frequenz variiert werden.

In vorteilhaften Weiterbildungen liegt wenigstens eine Frequenz einer Veränderung der abgegebenen Wärmeleistung zwischen 0,01 Hz und 10 Hz (oder zwischen 0,005 Hz und 20 Hz) und besonders bevorzugt liegt eine Frequenz einer Veränderung der abgegebenen Wärmeleistung zwischen 0,02 und 5 Hz. In vorteilhaften Ausgestaltungen kann die Frequenz zwischen 0,03 Hz und (etwa) 0,8 Hz betragen. Es sind aber auch andere Frequenzen möglich. Eine konkret vorteilhafte Frequenz der Veränderung der abgegebenen Wärmeleistung hängt insbesondere von dem zu untersuchenden Bauteil ab. Unterschiede können sich auch durch die zu untersuchenden Stellen auf einem Bauteil und in den dort jeweils vorliegenden Wandstärken und/oder Materialien ergeben. So ist es möglich, dass ein bestimmter Abschnitt oder ein bestimmter Bereich einer Fahrradkomponente mit anderen Frequenzbereichen untersucht wird als ein anderer Bereich oder Abschnitt der Fahrradkomponente.

In allen Ausgestaltungen ist es bevorzugt, dass die Steuereinrichtung dazu eingerichtet und ausgebildet ist, in dem Messvorgang wenigstens zwei (sich in wenigstens einem Parameter unterscheidende) Messabschnitte durchzuführen. Vorzugsweise wird die Wärmeleistung in den beiden Messabschnitten in zwei unterschiedlichen Frequenzbereichen abgegeben. Dabei weist einer der Frequenzbereiche geringere Frequenzen auf als der andere Frequenzbereich. Dadurch kann ein Abschnitt eines Komponentenkörpers einer Fahrradkomponente oder einer Fahrradkomponente insgesamt mit unterschiedlichen Frequenzbereichen untersucht werden. Dadurch wird die Wärmeleistung in (wenigstens) zwei unterschiedlichen Frequenzbereichen oder Frequenzen während der Messung variiert.

Möglich ist es, dass die Frequenz der Wärmeabgabe in einem oder in beiden (oder in noch mehr) Frequenzbereichen jeweils konstant ist. Möglich ist es aber auch, dass die Frequenz sich nur in einem oder in beiden Frequenzbereichen jeweils (kontinuierlich) ändert. In einfachen Ausgestaltungen wird jeweils eine (nahezu) monotone Frequenz in einem ersten Frequenzbereich und in einem zweiten Frequenzbereich ausgewählt. Durch eine Wärmeleistung, die mit unterschiedlichen Frequenzen in wenigstens zwei unterschiedlichen Messabschnitten variiert wird, können unterschiedliche Merkmale oder Eigenschaften der zu untersuchenden Fahrradkomponente detektiert werden. So kann jede Frequenz bzw. Frequenzbereich für unterschiedliche Wandstärken, Materialzusammensetzungen oder Materialstrukturen jeweils besser geeignet sein. Deshalb ist es auch möglich, dass (für Abschnitte des Komponentenkörpers) nicht nur zwei, sondern auch weitere Messabschnitte mit jeweils anderen Parametern verwendet werden.

Möglich ist es auch, dass unterschiedlichen Frequenzen oder Frequenzbereichen jeweils unterschiedliche Wärmequellen zugeordnet sind. Vorzugsweise werden für wenigstens zwei unterschiedliche Frequenzbereiche die gleichen Wärmequellen verwendet.

Insbesondere ist die Steuereinrichtung dazu eingerichtet und ausgebildet, sich periodisch wiederholende (und z.B. wellenartige Intensitätsverläufe der) Wärmeleistungen wenigstens einer Wärmequelle zu erzeugen. Dabei sind die Wärmeleistungen insbesondere Strahlungsintensitäten, die zum Beispiel wellenartig und vorzugsweise sinusartig (cosinusartig) variiert werden.

Möglich ist auch ein linearer Anstieg und Abfall sowie beispielsweise ein dreieckförmiger Verlauf der Wärmeleistungen. Der Leistungsverlauf kann auch sägezahnartig gestaltet sein. Real ist auch ein jeweils exponentieller Anstieg und anschließender exponentieller Abfall über jeweils eine Periode möglich. Bevorzugt ist auch ein Verlauf, bei dem die Wärmeabgabe periodisch (z.B. einfach) eingeschaltet und (z.B. einfach) wieder ausgeschaltet wird. Möglich ist es auch, dass die Wärmeabgabe an sich konstant bleibt, aber beispielsweise über Filter oder schaltbare Spiegelelemente oder dergleichen zu bestimmten Zeitpunkten oder Zeiträumen zugeschaltet und abgeschaltet bzw. abgelenkt wird, sodass sich ein periodisch wiederholender Verlauf der ankommenden Wärmeleistung ergibt.

In vorteilhaften Ausgestaltungen umfasst die Anlage wenigstens eine (ortsfeste) Kamera mit ortsaufgelösten Sensoren, die insbesondere in Zeilen und/oder Spalten angeordnet sind. So kann die Kamera Matrixsensoren aufweisen, die Zeilensensoren und Spaltensensoren umfasst. Möglich ist auch der Einsatz einer Kamera mit einem Zeilensensor, der passend kontrolliert verschwenkt wird, um den ganzen Abschnitt oder die ganze Fahrradkomponente zu erfassen und abzubilden.

In allen Ausgestaltungen ist es besonders bevorzugt, dass die Kamera im infraroten Strahlungsbereich lichtempfindlich ist. Vorzugsweise wird eine Wärmebildkamera eingesetzt, die zum Beispiel als Infrarotkameraeinrichtung ausgeführt ist. Es ist aber auch der Einsatz von Filtern denkbar, wobei die Filter dann insbesondere den Infrarotanteil des auftretenden Lichtes transportieren.

Vorzugsweise ist eine Mehrzahl von Kameras umfasst. Dabei können zwei oder mehr Kameras den gleichen oder denselben Abschnitt (des Komponentenkörpers) der Fahrradkomponente gleichzeitig erfassen. Möglich und bevorzugt ist es, dass wenigstens zwei Kameras unterschiedliche Teilbereiche des (des Komponentenkörpers oder des) Abschnitts der Fahrradkomponente (gleichzeitig) erfassen. Wenn zum Beispiel drei oder vier Kameras jeweils 1/3 oder 1/4 der zu untersuchenden Fläche der Fahrradkomponente gleichzeitig erfassen, so kann die Geschwindigkeit der Untersuchung erheblich (Faktor 2, 3 oder 4) gesteigert werden, was insbesondere bei der Untersuchung von Fahrradkomponenten bei der Serienherstellung von großem Vorteil ist. Außerdem kann die Genauigkeit erheblich gesteigert werden. Die einzelnen Bilder können im Nachgang zu einem Produktbild zusammengefügt werden.

Vorzugsweise wird während des Messvorgangs eine Vielzahl von Bildern und insbesondere Wärmebildern aufgenommen und daraus wird insgesamt wenigstens ein und insbesondere genau ein Bewertungsbild (gegebenenfalls pro Produktseite) abgeleitet. Vorzugsweise wird für jeden Frequenzbereich oder für wenigstens zwei Frequenzbereiche jeweils ein (separates) Bewertungsbild abgeleitet. Insgesamt können bei zwei Frequenzbereichen und zwei Seiten dann vier Bewertungsbilder vorliegen. In allen Fällen werden die Bewertungsbilder insbesondere (dauerhaft) archiviert.

Es ist wenigstens eine Umlenkeinrichtung (für Wärmestrahlung) umfasst, welche dazu ausgebildet ist, Wärmestrahlung umzulenken.

Dabei ist wenigstens eine Umlenkeinrichtung zur Lenkung von Wärmestrahlung von der Wärmequelle auf den Komponentenkörper und vorzugsweise eine von der Kamera abgewandte Seite des Komponentenkörpers umfasst. Dadurch kann nicht nur eine zu der Kamera ausgerichtete Seite des Komponentenkörpers gezielt mit Wärme versorgt werden, sondern auch eine davon abgewendete Rückseite oder eine schräg oder quer dazu ausgerichtete Seite. Möglich ist es aber auch, dass entsprechende zusätzliche Wärmequellen "von hinten" oder "von unten und/oder oben" zielgerichtet Wärme abgeben.

Besonders bevorzugt ist wenigstens eine Umlenkeinrichtung zur Lenkung von Wärmestrahlung von dem Komponentenkörper auf die Kamera umfasst. Diese Umlenkeinrichtung lenkt z. B. "nach hinten", also von der Kamera weg gerichtete Wärmestrahlung zu der Kamera um. Dann ist es besonders bevorzugt so, dass die Kamera auf der Sensorfläche getrennt voneinander die Vorderseite und z.B. die Rückseite und/oder quer dazu ausgerichtete Seitenflächen oder Innenflächen erfasst. So kann ohne Transport oder Drehung der Fahrradkomponente mit gegebenenfalls nur einem Bild die gesamte (relevante) Fläche der Fahrradkomponente bzw. des Komponentenkörpers der Fahrradkomponente erfasst und abgelichtet werden. Auch ein mehrmaliges Positionieren und/oder der Einsatz mehrerer (z.B. winkelversetzter) Kameras ist nicht nötig. Es können mehrere Ansichten in einem Bild dargestellt/gespeichert/bewertet werden.

Wenigstens eine Umlenkeinrichtung weist vorzugsweise eine kegelabschnittsförmige Ausgestaltung oder wenigstens einen Kegelstumpfabschnitt auf.

In allen Ausgestaltungen sind die Steuereinrichtung und die Wärmequelle vorzugsweise dazu eingerichtet und ausgebildet, die Fertigungsqualität von wenigstens teilweise aus Faserverbundwerkstoff und/oder von wenigstens teilweise aus metallischen Werkstoffen gefertigten Komponentenkörpern von Fahrradkomponenten zu bestimmen. Dabei können einzelne Bereiche entsprechend angepasst erfasst werden. Es ist insbesondere möglich, die Fertigungsqualität von Komponentenkörpern von Fahrradkomponenten aus Faserverbundwerkstoff zu erfassen und zu beurteilen. Möglich ist aber auch die Beurteilung der Qualität von Fahrradkomponenten, die zum Teil aus anderen Werkstoffen oder auch zum Beispiel nur aus Metall oder metallischen Werkstoffen bestehen. Bei Fahrradfelgen aus Leichtmetall oder anderen Fahrradkomponenten kann z.B. insbesondere auch die Qualität der Schweißverbindung überprüft werden.

In allen Ausgestaltungen können durch (mehrere) Umlenkeinrichtungen wie z.B. durch das Einsetzen von Spiegeleinheiten (in einfachen Ausgestaltungen z.B. in Form polierter Stahlbleche) mit einem Wärmebild mehrere oder alle Seiten eines Komponentenkörpers oder einer Fahrradkomponente insgesamt erfasst und analysiert werden. Dabei werden die Spiegeleinheiten in entsprechende Formen gebracht oder setzen sich aus vielen Spiegelteilen zusammen, die die entsprechende Form abdecken bzw. erzeugen. Z. B. kann eine kegelartige Form eingesetzt werden. Auch mehrere einfache (eben oder gerade ausgebildete) Umlenkeinrichtungen können zusammengesetzt z. B. einen Kreis oder Kegel oder dgl. ergeben. Auch andere Formen sind möglich, um insgesamt die gewünschten Ansichten bzw. die gewünschte Bestrahlung zu ermöglichen.

Beispielsweise kann eine Seite "A" einer Fahrradfelge frontal zur Kamera ausgerichtet sein. Durch (entsprechend geneigt) ausgerichtete Spiegeleinheiten kann gleichzeitig auf einem Wärmebild dann auch das Felgenbett (Seite "B") und der Felgenboden (Seite "C") und die gegenüberliegende Seite erfasst und analysiert werden. Bei rohrförmigen Rahmenkomponenten können Spiegeleinheit(en) ebenfalls mehrere Seiten gleichzeitig erfassen. Die Anzahl, Form und Art der Spiegeleinheiten hängt von der konkreten Ausgestaltung der Fahrradkomponente ab.

Es ist möglich und bevorzugt, dass auch die Wärmestrahlung entsprechend umgelenkt und auf den Komponentenkörper gelenkt wird. Vorzugsweise werden dieselben Spiegeleinheiten zur Umlenkung der Wärmestrahlung und zur Wiedergabe der entsprechenden Bereiche eingesetzt. Insgesamt kann dadurch die Verarbeitung beschleunigt werden. Der Durchsatz steigt und die Stückkosten sinken. Die Zuverlässigkeit wird erhöht.

Möglich und bevorzugt ist es, dass neben Wärmebildern auch noch wenigstens ein "normales" Bild bzw. Foto angefertigt wird, mit dem eine automatisierte Auswertung des optischen Eindrucks der Fahrradkomponente erfolgen kann. So kann automatisiert auch die Oberflächenqualität der Fahrradkomponente bewertet werden.

Die Anfertigung einer Mehrzahl und insbesondere Vielzahl von Wärmebildern während eines Messvorgangs ermöglicht eine Erhöhung der Genauigkeit der Auswertung, sodass die Qualität zuverlässiger und reproduzierbarer begutachtet werden kann. Außerdem kann bei den unterschiedlichen Bildern bzw. Wärmebildern eine Variation der jeweiligen Eigenschaften erfolgen, sodass unterschiedliche Aspekte (in unterschiedlichen Bewertungsbildern) berücksichtigt und ausgewertet werden können.

Vorzugsweise wird wenigstens das eine Bewertungsbild in einer Speichereinrichtung abgelegt und der Fahrradkomponente eindeutig und insbesondere dauerhaft zugeordnet. Die Speichereinrichtung kann lokal an der Steuereinrichtung vorgesehen sein. Das Bewertungsbild bzw. die Bewertungsbilder einer Fahrradkomponente bzw. die Bewertungsbilder von vielen Fahrradkomponenten werden in einem zentralen Speicher abgelegt. Dann kann auch nach längerer Zeit auf diese Bilder zurückgegriffen werden. Zur "Analyse" unterschiedlicher Stellen werden vorzugsweise unterschiedliche Bilder gemacht und diese überlagert. Es ist eine schnellste Klärung mehrerer Fragestellungen möglich.

In allen Ausgestaltungen ist die Steuereinrichtung vorzugsweise dazu eingerichtet und ausgebildet, Bilder und insbesondere Wärmebilder zu Zeitpunkten aufzunehmen, an denen die Strahlungsintensität bzw. die Wärmeleistung der Wärmequelle geringer ist als eine durchschnittliche Strahlungsintensität bzw. Wärmeleistung während des Messvorgangs insgesamt oder während eines Messabschnitts des Messvorgangs. Beispielsweise kann ein Wärmebild regelmäßig dann aufgenommen werden, wenn die abgegebene Wärmeleistung minimal oder nahezu minimal ist. Dadurch kann die Aussagekraft erhöht werden. Gute Zeitpunkte sind regelmäßig insbesondere im Minimum oder kurz davor oder kurz danach (z.B. +/- 10% der Periodenlänge).

In vorteilhaften Ausgestaltungen wird in dem Bewertungsbild eine ortsaufgelöste lokale Wandstärke der Fahrradkomponente durch eine Intensität und/oder Farbe des Bildpixels repräsentiert.

Vorzugsweise ist die Anlage dazu ausgebildet und eingerichtet, (ortsaufgelöste) Temperaturverläufe auf dem Komponentenkörper der Fahrradkomponente zu ermitteln und (zugeordnete) Phasenverschiebungen (bzw. der jeweilige Abstand oder Phasenversatz) der zugehörigen Temperaturverläufe zu dem Verlauf der Strahlungsintensität der Wärmequelle (ortsaufgelöst) zu ermitteln.

In allen Ausgestaltungen ist es bevorzugt, dass wenigstens eine Halteeinrichtung für die Fahrradkomponente umfasst ist, um die Fahrradkomponente für den Messvorgang definiert aufzunehmen. Dadurch können reproduzierbare Bedingungen gewährleistet werden. Besonders bevorzugt ist wenigstens ein Aktor umfasst, mit dem die Fahrradkomponente oder wenigstens ein Komponentenkörper automatisch positionierbar ist und/oder mit dem die Fahrradkomponente in verschiedene Stellungen positionierbar ist, um unterschiedliche Bereiche oder Seiten der Fahrradkomponente zu erfassen. Vorzugsweise kann eine automatische Positionierung (und z.B. Drehung oder Linearverschiebung) durchgeführt werden, um zunächst eine Seite und danach die andere Seite der Fahrradkomponente zu untersuchen. Möglich ist es auch, dass eine kontinuierliche Drehung und/oder Verschiebung erfolgt, um die Fahrradkomponente von allen Seiten gezielt zu untersuchen oder aber beispielsweise eine höher aufgelöste Messung durchzuführen. Zur besseren Auflösung der Bildaufnahme kann eine schrittweise Drehung um eine Symmetrieachse erfolgen.

Vorzugsweise ist wenigstens eine (automatische) Zufuhreinrichtung und wenigstens eine (automatische) Abfuhreinrichtung für Fahrradkomponenten umfasst, um eine automatische Bearbeitung und Analyse zu ermöglichen.

Zur Analyse kann beispielsweise auch eine Wiegeeinrichtung zugeordnet sein, um ein Gewicht der Fahrradkomponente (automatisiert) zu erfassen. Dadurch können auch Rückschlüsse auf die Qualität gezogen und fehlerhafte Fahrradkomponenten aussortiert werden.

In allen Ausgestaltungen ist es möglich und bevorzugt, dass eine Kodiereinrichtung umfasst ist. Eine solche Kodiereinrichtung kann zum Erkennen einer Kodierung dienen. Möglich ist es auch, dass eine Kodiereinrichtung zum Aufbringen einer Kodierung ausgebildet ist. So ist es möglich, dass mit einer Kodiereinrichtung eine eindeutige Kodierung (z.B. in Form einer Seriennummer) an der Fahrradkomponente aufgebracht wird. Besonders bevorzugt wird mit einer Kodiereinrichtung eine eindeutige Kodierung einer Fahrradkomponente erkannt. Die Kodiereinrichtung kann dann auch als Kodiererkennungseinrichtung oder Kodiererkennung bezeichnet werden. Dadurch ist es möglich, die Bewertungsbilder und ein Bewertungsergebnis eindeutig der Fahrradkomponente zuzuordnen. So kann auch (viel) später auf das Messergebnis zurückgegriffen werden, wenn beispielsweise auch Jahre später ein Schaden auftritt. Solche Daten können auch zur Optimierung und Verbesserung der Produktion genutzt werden, um die Produktion zu vereinfachen oder zu optimieren oder um sich herausstellende Mängel zu vermeiden. Langzeituntersuchungen sind möglich. Dazu muss nicht unbedingt eine exakte Zuordnung möglich sein. Eine Chargennummer kann auch hilfreich sein.

In allen Ausgestaltungen ist die Anlage vorzugsweise dazu eingerichtet und ausgebildet, die Fertigungsqualität von Fahrradfelgen zu untersuchen und wenigstens die Seitenflächen der Fahrradfelgen (nahezu) vollständig zu erfassen. Insbesondere werden die Seitenflächen vollständig untersucht.

In bevorzugten Ausgestaltungen werden (wenigstens) vier Kameras eingesetzt, die jeweils Felgensegmente von etwa 90° (hoch aufgelöst) untersuchen. Dabei können nicht nur die Seitenwände, sondern auch der Felgenboden und das Felgenbett mit den Kameras untersucht werden. Denkbar ist auch der Einsatz einer zentralen Kamera und einer Dreheinrichtung zur Untersuchung z.B. des Felgenbodens oder des Felgenbetts, um nicht nur die Felgenflanken, sondern auch den Felgenboden und/oder das Felgenbett gezielt zu untersuchen.

Möglich ist auch der Einsatz von zwei oder mehr Kameras, die jeweils schräg zueinander ausgerichtet sind und unter mehreren Winkeln ein Wärmebild der zu untersuchenden Fahrradkomponente erfassen.

Vorzugsweise werden mehrere Wärmebilder aufgenommen, bei denen die Wärmeleistungen mit mehreren Frequenzen variiert werden. Die aufgenommenen Wärmebilder werden insbesondere pro Frequenz zu (wenigstens) einem Gesamtbild bzw. (jeweils genau) einem Bewertungsbild verrechnet. Es erfolgt dann vorzugsweise eine automatische Analyse, wobei anhand eines "Sollwertbildes" ein automatischer Vergleich erfolgt. Dadurch können eine automatische Erkennung einer Qualitätsstufe und eine automatische Aussortierung von Fahrradkomponenten erfolgen, die den gestellten Anforderungen nicht genügen. Denkbar ist es auch, aus den unterschiedlichen Frequenzbereichen insgesamt ein einzelnes Bewertungsbild abzuleiten. Dabei können die unterschiedlichen Frequenzen unterschiedlichen Farben zugeordnet werden. Vorzugsweise wird für jeden Frequenzbereich ein separates Bewertungsbild erstellt, welches dann insbesondere eine gewisse Strukturtiefe repräsentiert.

Es ist möglich, die Fahrradkomponenten in verschiedene Qualitätsstufen einzuordnen, sodass für bestimmte Anforderungen besonders hochwertige Fahrradkomponenten ausgewählt werden können. Mangelhafte Fahrradkomponenten werden jedenfalls aussortiert. Dadurch, dass eine Einzelbegutachtung aller gefertigten Serienteile möglich ist, kann die Qualität jedenfalls erheblich gesteigert und zudem auch garantiert werden.

Es ist auch möglich, die Qualität von Fahrradkomponenten zu beurteilen, die nicht oder nur zum Teil aus Faserverbundwerkstoffen bestehen. Möglich ist auch die Untersuchung anderer Materialien. Bei Fahrradfelgen, die (zum Teil) aus Leichtmetallen bestehen, kann das Material insgesamt und vorzugsweise auch die Stoßverbindung (Schweißstoss) untersucht werden. So kann z. B. der Schweißstoss oder auch die Positionierung von eingesetzten Verbindungsstücken überprüft werden.

Die Anmelderin behält sich vor, die Verwendung einer Anlage zum Überprüfen der Fertigungsqualität von Fahrradkomponenten mit wenigstens einem Komponentenkörper zu beanspruchen. Dabei umfasst die Anlage wenigstens eine Steuereinrichtung, wenigstens eine Wärmequelle und wenigstens eine Kamera und insbesondere wenigstens eine Wärmebildkamera. Die Wärmequelle ist dazu ausgebildet und eingerichtet, während eines Messvorgangs wenigstens einen Abschnitt des Komponentenkörpers oder der Fahrradkomponente (zeitlich gesteuert und gezielt) mit Wärme zu beaufschlagen. Die Kamera ist dazu eingerichtet und ausgebildet, wenigstens ein ortsaufgelöstes Wärmebild wenigstens eines Teilbereichs des Abschnitts der Fahrradkomponente zu erfassen und auszuwerten, um (durch Analyse des Wärmebildes) die Fertigungsqualität der Fahrradkomponente zu bestimmen. Insbesondere wird mit einer Umlenkeinrichtung Wärmestrahlung umgelenkt, um verschiedene Seiten der Fahrradkomponente (simultan) zu erfassen.

Das erfindungsgemäße Verfahren dient zum Überprüfen der Fertigungsqualität von Fahrradkomponenten mit wenigstens einem Komponentenkörper, wobei mit wenigstens einer Wärmequelle wenigstens ein Abschnitt der Fahrradkomponente gezielt mit Wärme versorgt wird. Mit wenigstens einer Kamera und insbesondere mit wenigstens einer Wärmebildkamera wird wenigstens ein Wärmebild wenigstens eines Teilbereichs des Abschnitts der Fahrradkomponente aufgenommen. Das Wärmebild wird ausgewertet, um eine Fertigungsqualität der Fahrradkomponente zu ermitteln. Vorzugsweise wird mit (wenigstens) einer Umlenkeinrichtung Wärmestrahlung umgelenkt wird, um verschiedene Seiten der Fahrradkomponente (insbesondere simultan) zu erfassen.

Auch die Verwendung einer Anlage und das erfindungsgemäße Verfahren haben viele Vorteile. Die Verwendung der Anlage und das Verfahren eignen sich insbesondere sehr vorteilhaft zum Überprüfen der Fertigungsqualität von wenigstens teilweise aus Faserverbundwerkstoff gefertigten Fahrradkomponenten.

Vorzugsweise wird der Abschnitt (des Komponentenkörpers) der Fahrradkomponente mit einer periodisch veränderlichen Wärmeleistung beaufschlagt. Insbesondere wird der Abschnitt (des Komponentenkörpers) der Fahrradkomponente mit einer wellenförmigen und/oder periodisch veränderlichen Wärmestrahlung bestrahlt. Z. B. auch durch Blitzlampen.

Vorzugsweise wird der Abschnitt (des Komponentenkörpers) der Fahrradkomponente mit einer periodisch veränderlichen Wärmestrahlung in einem ersten Frequenzbereich und anschließend in einem zweiten davon unterschiedlichen Frequenzbereich bestrahlt. Vorzugsweise werden periodisch Wärmebilder aufgenommen und zwischengespeichert. Insbesondere wird aus den Wärmebildern (für jeden Frequenzbereich jeweils) ein Bewertungsbild für die Fertigungsqualität der Fahrradkomponente abgeleitet.

In allen Ausgestaltungen ist es bevorzugt, dass für verschiedene Orte oder Stellen (ortsaufgelöst) jeweils ein Temperaturverlauf auf dem Komponentenkörper der Fahrradkomponente ermittelt wird. An den jeweiligen Orten oder Stellen werden (ortsaufgelöst) Phasenverschiebungen der zugehörigen Temperaturverläufe zu dem Verlauf der Strahlungsintensität der Wärmequelle ermittelt. Dabei gilt grundsätzlich je größer die Phasenverschiebung (der Phasenversatz), desto größer die lokale Wärmekapazität und (bei bekanntem Material) die Wandstärke. Je kleiner die Phasenverschiebung (bzw. der Abstand), desto kleiner die Wandstärke. Grundsätzlich kann auch der Intensitätsverlauf ausgewertet werden.

Grundsätzlich gilt auch entsprechend, desto höher das Maximum des Temperaturverlaufs, desto kleiner die Wandstärke (Wärmekapazität). Wenn die Wärmekapazität bzw. lokale Wandstärke größer ist, dann wird das lokale Temperaturmaximum des Temperaturverlaufs kleiner sein. Insofern kann auch der Verlauf der Temperaturmaxima zur Auswertung herangezogen werden.

In der Regel sind Ergebnisse durch Auswertung der Phasenverschiebungen aber genauer, da sie weniger störanfällig sind. Ein Luftzug durch eine geöffnete Tür oder durch unerwartete Bewegungen im Raum kann die absolute Höhe stärker beeinflussen als die Phasenverschiebung. Es sind auch kombinierte Auswertungen möglich.

In einer bevorzugten Ausgestaltung ist in dem Bewertungsbild die Intensität eines Bildpixels von der Phasenverschiebung abhängig. Eine größere (kleinere) Wandstärke kann durch hellere (dunklere) Farben bzw. höhere Intensitäten repräsentiert werden oder umgekehrt.

Dabei wird in dem Bewertungsbild vorzugsweise eine lokale Wandstärke der Fahrradkomponente durch wenigstens einen Parameter des Bildpixels repräsentiert. Dabei kann wenigstens ein Parameter eine Intensität des Bildpixels und/oder eine Farbe des Bildpixels sein. Vorzugsweise wird eine eindeutige Zuordnung von Wandstärke und Parameter des Bildpixels durchgeführt.

In allen Ausgestaltungen ist es möglich, dass Felgen, Rahmenteile, Gabeln, Speichen, Lenker und/oder Anbauteile untersucht werden.

Die Anmelderin behält sich vor, ein Verfahren zum Überprüfen der Fertigungsqualität von Fahrradkomponenten und insbesondere Fahrradfelgen zu beanspruchen, wobei mit wenigstens einer Wärmequelle wenigstens ein Abschnitt der Fahrradkomponente gezielt mit Wärme versorgt wird und wobei mit wenigstens einer Kamera wenigstens ein Wärmebild wenigstens eines Teilbereichs des Abschnitts der Fahrradkomponente aufgenommen wird, und wobei das Wärmebild ausgewertet wird, um eine Fertigungsqualität der Fahrradkomponente (und insbesondere der Fahrradfelge) zu ermitteln, wobei der Komponentenkörper mit einer (eindeutigen) Kodierung ausgerüstet wird, der wenigstens ein Wärmebild und/oder Bewertungsbild eindeutig zugeordnet wird.

In bevorzugten Ausgestaltungen ist der Komponentenkörper wenigstens teilweise aus einem Faserverbundwerkstoff hergestellt bzw. besteht wenigstens teilweise daraus.

Weitere Vorteile und Merkmale der vorliegenden Erfindung ergeben sich aus den Ausführungsbeispielen, die im Folgenden anhand der beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3a: eine schematische Darstellung einer Anlage zur Überprüfung der Fertigungsqualität;
- Figur 3b: eine schematische Darstellung einer Fahrradkomponente und einer Umlenkeinrichtung einer Anlage zur Überprüfung der Fertigungsqualität;
- Figur 3c: die Anlage nach Figur 3b in einer perspektivischen Ansicht;
- Figur 4: zwei schematische Querschnitte von Fahrradkomponenten;
- Figur 5: ein Bewertungsbild einer Fahrradkomponente;
- Figur 6: eine zeichnerische Darstellung des Bewertungsbildes einer Fahrradkomponente;
- Figur 7: eine weitere schematische zeichnerische Darstellung eines Bewertungsbilds einer Fahrradkomponente;
- Figur 8: eine schematische Darstellung einer Anlage zur Überprüfung der Fertigungsqualität von Fahrradkomponenten;
- Figur 9: eine automatisierte Anlage zur Überprüfung der Fertigungsqualität von Fahrradkomponenten; und
- Figur 10: schematisch dargestellte Verläufe der abgegebenen Wärmeleistung über einen Messvorgang.

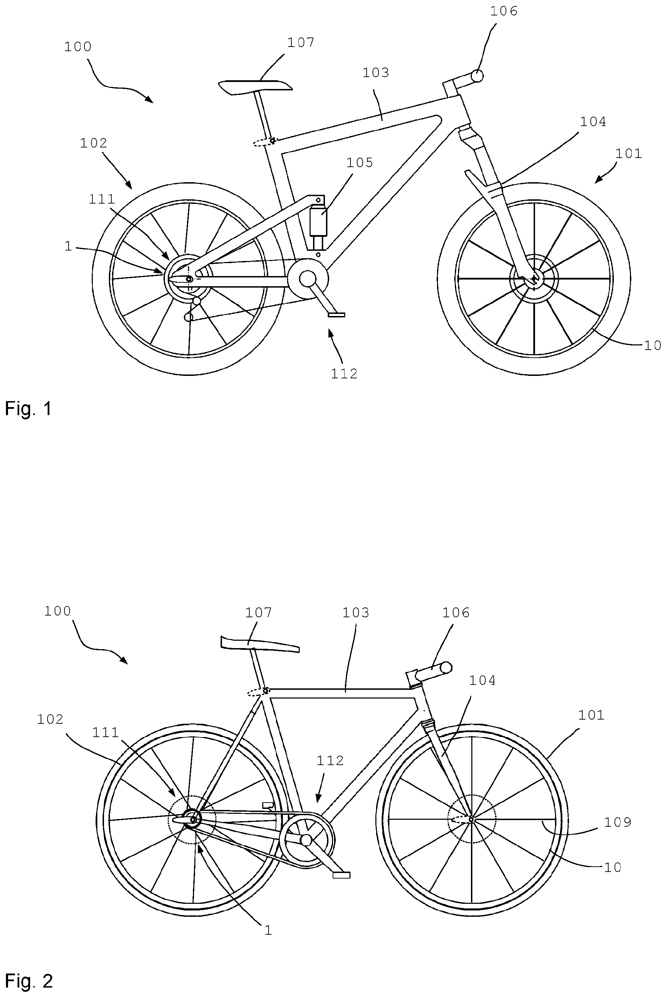

In den Figuren 1 und 2 sind jeweils ein Mountainbike bzw. ein Rennrad 100 dargestellt, die jeweils mit erfindungsgemäßen Fahrradkomponenten 1 ausgerüstet sind. Das Mountainbike bzw. Rennrad 100 verfügt jeweils über ein Vorderrad 101 und ein Hinterrad 102. Hier weisen sowohl das Vorderrad 101 als auch das Hinterrad 102 Felgen 10 als anmeldungsgemäßen Fahrradkomponenten 1 auf. Grundsätzlich können aber auch andere Fahrradkomponenten des Mountainbikes bzw. Rennrades 100 entsprechend gefertigt und hinsichtlich der Fertigungsqualität beurteilt sein.

Die beiden Räder 101, 102 verfügen über Speichen 109. Eine Ritzeleinrichtung 111 ist vorgesehen. Grundsätzlich können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. eine Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

Grundsätzlich kann der Rahmen insgesamt eine anmeldungsgemäße Fahrradkomponente 1 sein. Der Rahmen kann aber auch aus mehreren Rohren zusammengesetzt sein, die als anmeldungsgemäße Fahrradkomponenten 1 ausgeführt sind. Ebenso können der Lenker 106 und/oder die Gabel 104 als anmeldungsgemäße Fahrradkomponenten 1 ausgeführt sein. Die Qualität der einzelnen Teile und Fahrradkomponenten 1 kann jeweils separat erfasst und überwacht werden.

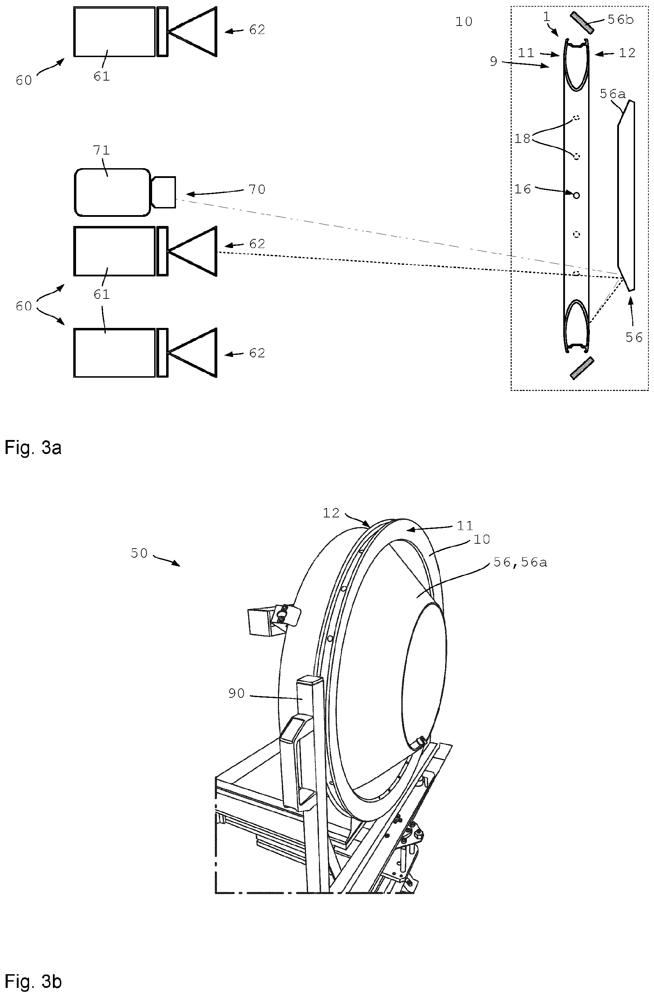

Figur 3a zeigt eine stark schematische Draufsicht auf eine Anlage 50 zu Beurteilung der Fertigungsqualität von Felgen 10 oder auch anderen Fahrradkomponenten 1, die einen Komponentenkörper 9 umfassen. Die Anlage 50 verfügt über mehrere Wärmequellen 60, die hier als Strahlungsquellen 61 und im besonderen als Quarzlampen 62 ausgeführt sind. Kameras 70, die hier als Wärmebildkameras oder Infrarotkameras 71 ausgeführt sind, erfassen wenigstens einen Teil, einen Abschnitt oder eine gesamte Seite der Felge 10 als Fahrradkomponente 1. Über eine Umlenkeinrichtung 56 wird auch eine abgewandte Seite untersucht und dokumentiert.

Die Fahrradkomponente 1 ist hier schematisch rechts daneben im Schnitt dargestellt. Die Felge 10 kann über ein Ventilloch 16 und Speichenlöcher 18 verfügen. In der dargestellten Orientierung können mit der Kamera 70 die Felgenseiten 11 und 12 der Felge 10 erfasst werden. Ein Drehen der Felge zur Untersuchung der anderen Felgenseite 12 ist nicht nötig.

Zur Untersuchung der Fertigungsqualität wird die Felge 10 mit Wärmeleistung und hier mit Wärmestrahlung der Quarzlampen 62 beaufschlagt. Die Wärmeleistungen der Wärmequellen 60 werden periodisch variiert. Zu Zeitpunkten mit geringeren Wärmeleistungen werden Wärmebilder 75 mit der Kamera 70 erstellt, die ausgewertet werden, um die Fertigungsqualität der Felge 10 zu überprüfen.

Mit der Anlage 50 ist eine verbesserte Nutzung und ein hoher Durchsatz möglich. Dazu ist wenigstens eine Umlenkeinrichtung 56 vorgesehen, die z.B. eine Spiegeleinheit 56a oder auch mehrere Spiegeleinheiten 56a, 56b umfassen kann. Die Umlenkeinrichtung 56 lenkt hier mit der Spiegeleinheit 56a die Strahlen 58 von der Wärmequelle 60 auf die Rückseite 12 der Felge 10 um, sodass neben der (vorderen) Felgenseite 11 auch die (rückwärtige) Felgenseite 12 mit Wärmestrahlung 63 der Wärmequelle 60 gezielt und gesteuert beaufschlagt wird. Die gleiche Umlenkeinrichtung 56 oder eine andere lenkt wiederum Wärmestrahlung (Strahlen 59) von der Rückseite auf die Kamera 72, sodass diese nicht nur eine Wärmebild der Vorderseite 11, sondern gleichzeitig auch der Rückseite 12 aufnimmt. Die Abbilder sind ortsversetzt auf dem Sensor angeordnet, sodass Vorder- und Rückseite (und gegebenenfalls Oberseite und Unterseite etc.) gleichzeitig auf einem einzigen Sensorbild versetzt zueinander abgebildet werden. Das erhöht den Durchsatz und senkt den Aufwand. Weiterhin kann die Umlenkeinrichtung 56 eine Spiegeleinheit 56b oder auch mehrere über den Umfang segmentierte Spiegeleinheiten 56b umfassen, die das Felgenbett von außen und gegebenenfalls die Felgenhörner von innen bestrahlen und/oder erfassen.

Figur 3b zeigt eine schematische perspektivische Darstellung einer Fahrradfelge 10 und einer Umlenkeinrichtung 56 einer Anlage 50 zur Überprüfung der Fertigungsqualität von Fahrradfelgen 10. Die Fahrradfelge 10 ist an einer Halteeinrichtung 90 aufgenommen und kann mittels der Spiegeleinheit 56a der Umlenkeinrichtung 56 von beiden Seiten 11 und 12 gleichzeitig untersucht werden.

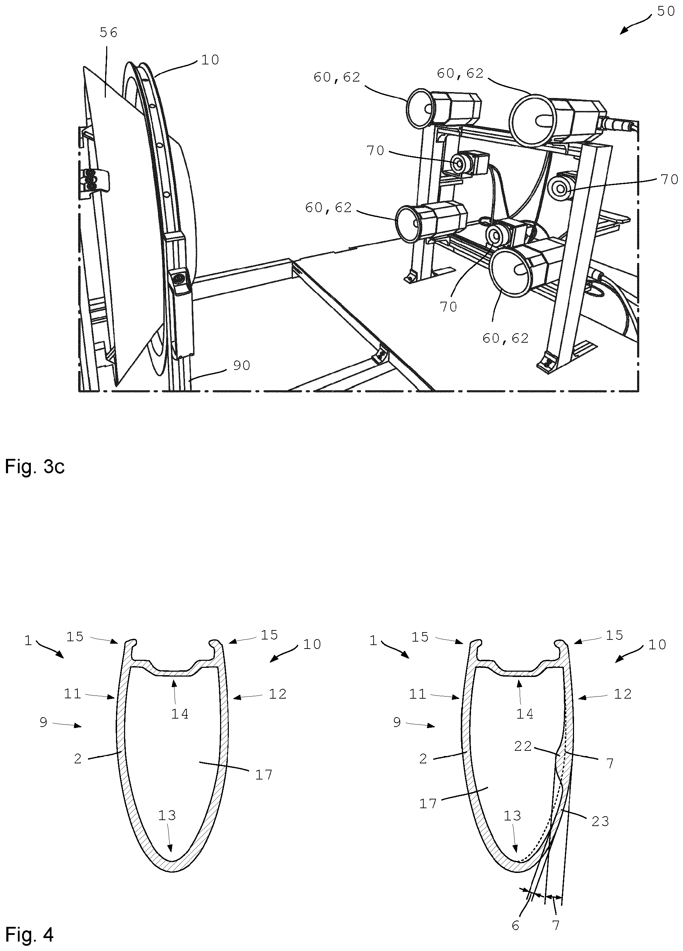

Figur 3c zeigt die vollständige Anlage 50 nach Figur 3b in einer perspektivischen Ansicht, wobei hier auch vier als Quarzlampen 62 ausgebildete Wärmequellen 60 und drei Wärmebildkameras 70 zu sehen sind, welche hier gleichzeitig Bilder der Vorderseite und der Rückseite der Fahrradfelge 10 aufnehmen. Über die Spiegeleinheit 56a der Umlenkeinrichtung 56 wird hier nämlich auch ein Teil der Wärmestrahlung der Quarzlampen 62 auf die rückwärtige Seite 12 der Fahrradfelge abgestrahlt. Die davon wiederum anschließend ausgestrahlte Wärmestrahlung wird (hier) durch dieselbe Spiegeleinheit 56a zurückgeworfen und trifft auf die Wärmebildkamera(s) 70. Mehrere Wärmequellen 60 können die Gesamtleistung erhöhen und/oder auf separate Teilbereiche ausgerichtet sein. Mit mehreren Wärmebildkameras 70 können separate Teilbereiche erfasst werden und/oder es kann die Qualität bzw. Genauigkeit der Wärmebilder verbessert werden. Figur 4 zeigt zwei schematische Querschnitte einer Felge 10 als Fahrradkomponente 1, wobei die links abgebildete Fahrradkomponente 1 und deren Komponentenkörper 9 eine hohe Fertigungsqualität aufweist. Die Form und die Wandstärken und die Hohlkammer 17 sind so ausgebildet, wie gewünscht. Diese Felge kann zur Herstellung eines Referenzbildes verwendet werden.

Die Felgen 10 verfügen jeweils über Felgenseiten 11 und 12, einen Felgenboden 13, ein Felgenbett 14 und Felgenhörner 15. Im Inneren ist eine Hohlkammer 17 ausgebildet. Die Felge 10 besteht hier insgesamt aus Faserverbundwerkstoff 2. Möglich ist es aber auch, dass einzelne Teile oder Komponenten einer Fahrradfelge 10 oder einer Fahrradkomponente 1 auch aus anderen Werkstoffen bestehen.

Im Fall einer Hohlkammerfelge, wie sie in Figur 4 links abgebildet ist, kann der bei der Fertigung verwendete Luftschlauch beispielsweise durch das Ventilloch 16 entfernt werden.

In Figur 4 rechts dargestellt ist eine fehlerhaft produzierte Felge 10, bei der im Vergleich zu linken Abbildung deutlich wird, dass die Wandstärke 6 des Komponentenkörpers 9 an einer dünneren Stelle 22 erheblich geringer ist als gewünscht. An der dickeren Stelle 23 ist die Wandstärke 7 erheblich größer als vorgesehen. Diese Unterschiede schränken die Belastbarkeit stark ein.

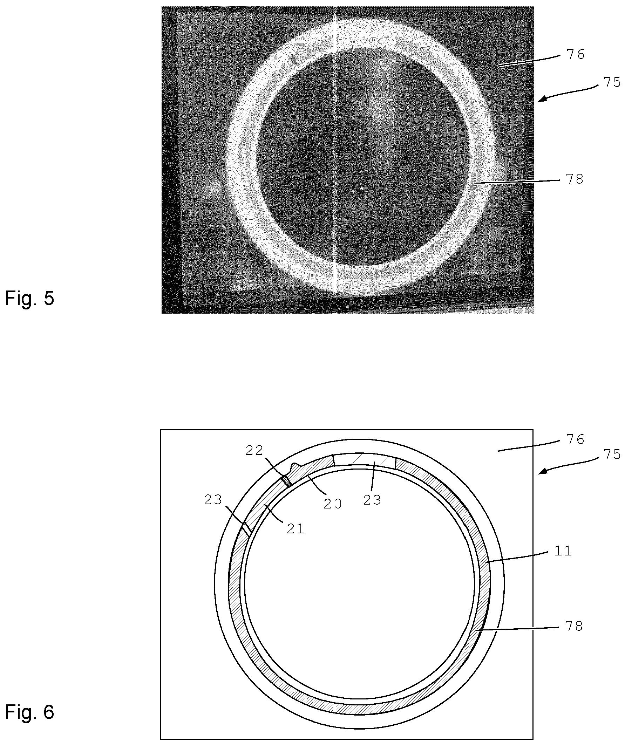

Durch eine gezielte periodische Erhitzung der hier rechten Felgenseite 12 mittels der Wärmequellen 60 aus Figur 3 kann eine homogene Wärmezufuhr über der Fläche erfolgen. Aufgrund der Wandstärkenunterschiede (höhere Wärmekapazität) führt aber auch eine homogene Wärmezufuhr zu einer inhomogenen Erwärmung der rechten Felgenseite 12. Das kann mit einem Wärmebild 75 (vergleiche Figur 5) erfasst und dokumentiert werden. Bei einer kurzzeitigen Bestrahlung werden dickere Wandstellen weniger stark erwärmt als dünnere Wandbereiche. Dadurch wird in dem Wärmebild eine Information über die Struktur der Fahrradkomponente 1 hinterlegt.

Mit einem (automatisierten) Vergleich kann somit die Qualität bzw. Fertigungsqualität der Fahrradkomponente 1 (automatisch) ermitteln werden. Fahrradkomponenten 1 mit ungenügender Qualität können aussortiert werden. Alle Fahrradkomponenten 1 können in zwei (brauchbar/unbrauchbar) oder auch in mehr Qualitätsstufen einsortiert werden.

Figur 5 zeigt ein reales Bewertungsbild einer Felge 10 als Fahrradkomponente 1. Darunter ist in Figur 6 praktisch dasselbe Bewertungsbild in Form einer Strichzeichnung abgebildet. Klar erkennbar ist, dass hier ein mangelhaftes Exemplar einer Felge 10 untersucht wurde.

In dem in Figur 5 dargestellten Foto sind innerhalb des Bildes der Felge 10 hellere Stellen repräsentativ für eine größere Wandstärke, während dunklere Stellen eine geringere Wandstärke anzeigen. Deutlich erkennbar ist, dass in einem zentralen Bereich oben ein Bereich 23 mit einer dickeren Wandstärke vorliegt. Ebenso gibt es in einem linken oberen Bereich eine hellere Stelle, die eine dickere Wandstelle 23 anzeigt. Ein deutlich dunklerer Fleck 22 in dem Bereich der Hohlkammer deutet eine dünnere Stelle 22 an, wo eine geringere Wandstärke 6 vorliegt. Das zugehörige Segment 21 (Prepregstück) wurde hier vermutlich fehlerhaft etwas versetzt aufgelegt, sodass sich an den Rändern des Segmentes 21 auf der einen Seite eine zu große Wandstärke in dem Bereich 23 eingestellt hat, während in dem Bereich 22 eine dünnere Stelle vorliegt, bei der die Wandstärke den Qualitätsanforderungen nicht genügt.

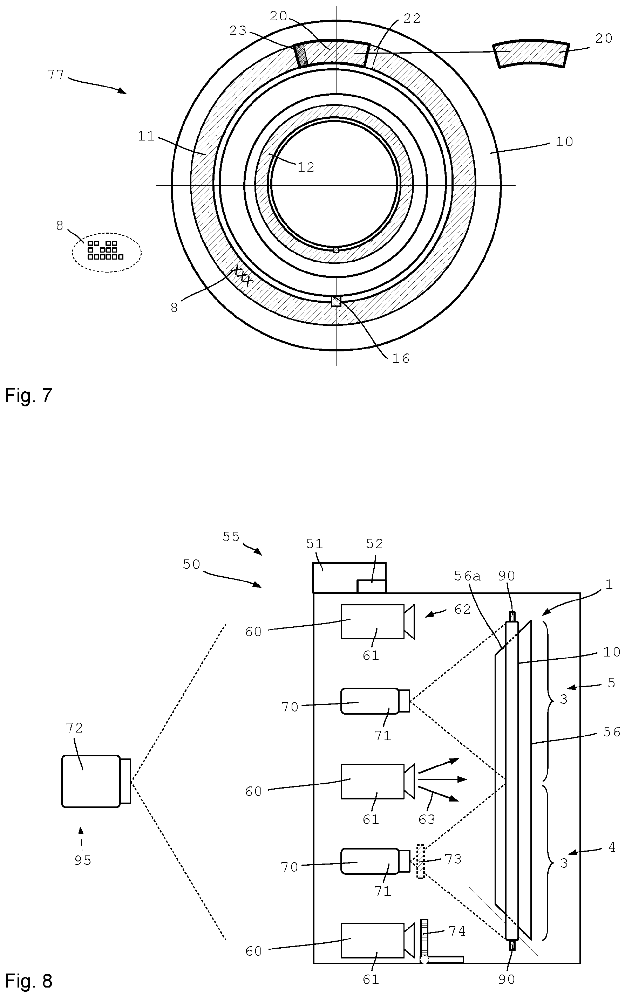

Figur 7 zeigt ein weiteres schematisches Bewertungsbild 77, welches aus mehreren Wärmebildern 75 zusammengesetzt ist und zur Auswertung aufbereitet wurde. Zur Verdeutlichung ist hier ein Segment 20 eines Prepregs oder eines Fasergewebes rechts daneben dargestellt, welches oben im zentralen Bereich der Felge 10 fehlerhaft aufgelegt wurde. Dadurch gibt sich am rechten Ende des Segments 20 eine dünnere Stelle 22, während an dem anderen Ende des Segments 20 eine dickere Stelle 23 vorhanden ist. Während der Bereich der größeren Wandstärke 23 die Stabilität regelmäßig nicht beeinträchtigt, kann jedenfalls die dünnere Stelle 22 zu einer Gefährdung im Betrieb führen. Ein zusätzliches Segment kann zu einer dickeren Stelle und damit auch zu einer Unwucht führen.

Bei einer Felge muss die nötige Stabilität über den vollständigen Umfang der Seitenfläche gewährleistet sein, da durch die Drehbewegung des Rades jede Stelle auf dem Umfang regelmäßig entsprechend belastet wird. Deshalb ist für eine Produktion hochwertiger Fahrradkomponenten eine automatisierte Kontrolle der Fertigungsqualität von Felgen sehr vorteilhaft.

Schematisch eingezeichnet ist in Figur 7 noch eine Kodierung 8, beispielsweise auf einer Seitenfläche der Felge, die eine Typangabe und gegebenenfalls sogar eine exakte Identifizierung (Seriennummer) der genauen Fahrradkomponente 1 ermöglicht. Eine solche Kodierung kann Buchstaben, Ziffern, Muster und dergleichen mehr umfassen. Möglich ist auch eine Kodierung 8 über ein Punktmuster (DOT-Code), wie es links neben der Abbildung schematisch dargestellt ist. Eine solche Kodierung 8 kann direkt aufgedruckt, eingearbeitet oder auch aufgeklebt werden. Ein Klebeetikett kann z.B. aufgeklebt werden, wenn oder bevor die Felge in die Anlage kommt. Ein solcher Aufkleber kann einen QR Code enthalten. Möglich ist auch die Platzierung eines RFID-Chips z. B. im Inneren des Komponentenkörpers oder im Inneren der Fahrradkomponente 1.

Im unteren Bereich der Abbildung 7 ist das Ventilloch 16 zu erkennen. Das kann zur Orientierung und eindeutigen Winkelausrichtung der Wärmebilder dienen. Gegebenenfalls kann auch ein Loch zum Entfernen des Folienschlauchs zur Orientierung verwendet werden. Auch andere Löcher oder Spezialstellen oder Erkennungsmerkmale können zur Orientierung genutzt werden. Die Ausrichtung ist physisch und/oder auch digital (bei Bilderkennung) möglich.

Speichenlöcher 18 können vorgesehen sein, können aber auch erst nach der Überprüfung der Fertigungsqualität eingebracht werden. Im inneren Bereich von Figur 7 ist die Rückseite 12 der Felge 10 zu sehen, die durch Umlenkeinrichtungen 56 gleichzeitig untersucht und abgebildet wurde. Hier ist auch zu erkennen, dass die Rückseite 12 - im Unterschied zu weiter außen abgebildeten Vorderseite 11 - über eine einwandfreie Fertigungsqualität verfügt. Den auf der Vorderseite 11 erkennbaren Fehler im Lagenbild gibt es auf der Rückseite 12 nicht. Dennoch ist diese Felge 10 aufgrund der Fehler an der Vorderseite 11 unbrauchbar. Auch solche Einzelfehler bei der Fertigung werden zuverlässig erkannt.

Über die Spiegeleinheiten 56a, 56b kann die in der Regel rechteckige Sensorfläche besser ausgenutzt werden. Außerdem kann die Geschwindigkeit der Messung verbessert werden.

Figur 8 zeigt eine Variante der Anlage 50, in der schematisch einer Felge 10 als Fahrradkomponente 1 eingebracht ist. Die Steuereinrichtung 51 umfasst hier eine Speichereinrichtung 52, in der die Bewertungsbilder und gegebenenfalls auch die einzelnen Wärmebilder gespeichert werden.

Die Wärmequellen 60 sind hier vorzugsweise wieder als Strahlungsquellen 61 und insbesondere als Quarzlampen 62 ausgeführt und sind auf die zu untersuchende Fahrradkomponente 1 ausgerichtet.

Kameras 70, die insbesondere als Infrarotkameras 71 ausgeführt sind, detektieren unterschiedliche Teilbereiche 4, 5 des Abschnitts 3 der Fahrradkomponente 1. Dabei ist es möglich, dass die Fahrradkomponente 1 mehrere und/oder unterschiedlich ausgebildete Abschnitte 3 aufweist. Möglich ist es aber auch, dass der Abschnitt 3 die vollständige Fahrradkomponente 1 umfasst. Dann kann die vollständige Fahrradkomponente 1 auf einmal erfasst werden.

Die Fahrradkomponente 1 wird hier über eine Halteeinrichtung 90 gehalten, die radial hier von außen die Felge 10 hält. Möglich ist es auch, dass die Halteeinrichtung 90 wenigstens einen Greifer umfasst oder als ein Aktor 91 ausgeführt ist, womit die Fahrradkomponente 1 gegebenenfalls automatisch zugeführt und wieder entfernt werden kann.

In Figur 8 ist auf der linken Seite noch eine Kamera 72 abgebildet, die hier eine Kodiereinrichtung bzw. eine Kodiererkennung 95 darstellt. Über diese Kamera, die im Wesentlichen (oder auch nur) im normalen Sichtbereich des Spektrums (z. B. Wellenlängenbereich von 400 nm bis 700 nm oder auch von 400 nm bis 1000 nm) lichtempfindlich sein kann, kann beispielsweise die Kodierung 8 der Fahrradkomponente 1 erfasst werden, sodass eine eindeutige Zuordnung von Fahrradkomponente und Bewertungsbild(ern) durchgeführt werden kann, falls die Zuordnung nicht vorher schon eindeutig ist. Gegebenenfalls wird auch ein Klebestreifen mit der eindeutigen Kodierung 8 auf die Fahrradkomponente 1 aufgebracht. So kann nicht nur eine Aufteilung der Fahrradkomponenten in die Kategorien "gut" und "schlecht" durchgeführt werden, sondern es können die Bewertung und die Bilder auch dauerhaft gespeichert und eindeutig zugeordnet werden.

Vorzugsweise ist die Kamera 72 im Infrarotbereich lichtempfindlich und kann auch bei Wellenlängen von bis zu 3 µm oder bis zu 10 µm oder 15 µm strahlungsempfindlich sein. Es ist möglich, dass ein Teil des sichtbaren Spektrums oder der gesamte Strahlungsanteil im sichtbaren Teil des Spektrums herausgefiltert wird. Das kann die Auflösung und Messgenauigkeit erhöhen, da verfälschende Strahlungsanteile blockiert wird.

In Figur 8 sind zusätzliche Varianten eingezeichnet, bei denen z.B. wenigstens eine Filtereinheit 73 vor der Kamera 72 eingesetzt wird, um die Kamera 72 nur mit dem relevanten und aussagekräftigen Anteil des Strahlungsspektrums zu beaufschlagen. Dadurch kann gegebenenfalls eine standardisierte Kamera eingesetzt werden, die in vielen Wellenlängenbereichen empfindlich ist. Strahlung mit Wellenlängen, die die Messung negativ beeinflussen kann, wird dann herausgefiltert.

Weiterhin ist in Figur 8 eine Variante schematisch eingezeichnet, bei der Spiegelelemente 74 vor den Wärmequellen angeordnet sind, um z.B. durch ein Verschwenken der Spiegelelemente 74 ein gezieltes Beaufschlagen der Fahrradkomponente 1 mit Wärmestrahlung zu gewährleisten. Durch ein Verschwenken der Spiegelelemente 74 kann schnell und zuverlässig die Wärmestrahlung "eingeschaltet" und "ausgeschaltet" werden. Deshalb sind die Spiegelelemente 74 in zwei Schwenkstellungen angedeutet dargestellt.

Die Spiegelelemente 74 können auch so angeordnet werden, dass sie die Wärmestrahlung im "ausgeschalteten" Zustand zur Seite reflektieren und im angeschalteten Zustand praktisch ungestört weiterleiten oder aber in die gewünschte Richtung umlenken.

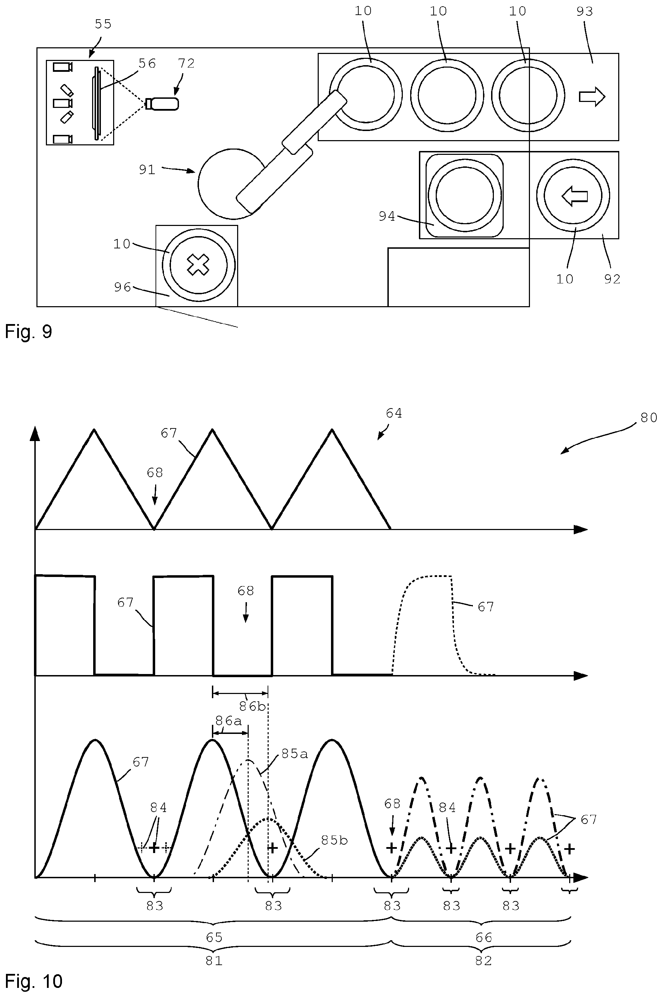

Figur 9 zeigt eine automatisierte Anlage 50, bei der eine Zufuhreinrichtung 92 die Felgen 10 bzw. Fahrradkomponenten 1 automatisch zuführt. Eine Wiegeeinrichtung 94 wiegt die entsprechende Fahrradkomponente 1. Danach wird die Fahrradkomponente 1 mit dem Aktor 91 zu der Messeinrichtung 55 gebracht und automatisch dort positioniert. Dort erfolgt die automatische Vermessung.

Ausreichend gute Fahrradkomponenten 1 werden über die Abfuhreinrichtung 93 abtransportiert. Fahrradkomponenten 1, die den Qualitätsanforderungen nicht genügen, werden zu dem Ausschusslager 96 gebracht und dort beispielsweise gestapelt und später weiter untersucht oder recycelt.

Figur 10 zeigt den Intensitätsverlauf der Wärmeleistung während eines Messvorgangs 80. Dabei sind verschiedene mögliche Verläufe der Wärmeleistung 63 einer Wärmequelle in der Höhe versetzt übereinander abgebildet.

Die unterste Kurve zeigt den Verlauf der Strahlungsintensität 67 über der Zeit. Der Verlauf ist hier wellenförmig und insbesondere etwa sinusförmig. Die Wärmeleistung 63 steigt zunächst zunehmend an, flacht ab und fällt nach einem Maximum wieder ab. In einem Messintervall 83 wird zu einem Messzeitpunkt 84 ein Wärmebild von dem Abschnitt 3 der Fahrradkomponente 1 aufgenommen.

Das Messintervall 83 befindet sich vorzugsweise in einem zeitlichen Bereich, in dem weniger als die durchschnittliche Wärmeleistung von der Wärmequelle 60 auf die Fahrradkomponente 1 abgestrahlt wird. Insbesondere erfolgt die Aufnahme der Wärmebilder 75 zu einem Zeitpunkt 84, der sich im Minimum der ausgestrahlten Wärmeleistung oder der sich nahe des Minimums befindet.

Klar erkennbar ist der periodische Verlauf der Wärmeleistung über den ersten Messabschnitt 81, in dem die Wärmeleistung in einem Frequenzbereich 65 variiert wird. Hier erfolgt eine Variation der Wärmeleistung mit einer ersten geringeren und hier konstanten Frequenz (aus einem ersten Frequenzbereich 65).

Nach einer gewissen Anzahl von Perioden endet der erste Messabschnitt 81 und es schließt sich hier unmittelbar ein zweiter Messabschnitt 82 an, in dem mit einer anderen und höheren und hier auch konstanten zweiten Frequenz (aus einem zweiten Frequenzbereich 66) eine periodisch veränderliche Wärmeleistung 63 abgestrahlt wird. Dabei kann sich sowohl die Höhe bzw. Intensität der Wärmeleistung in dem zweiten Messabschnitt 82 von der Intensität der Wärmeleistung in dem ersten Messabschnitt 81 unterscheiden. Jedenfalls wird in dem zweiten Messabschnitt 82 die Wärmeleistung 63 mit einer anderen Frequenz 66 variiert. Hier im dargestellten Ausführungsbeispiel ist die Frequenz in dem zweiten Messabschnitt 82 höher. Der Messzeitpunkt 84 wird jeweils wieder so gewählt, dass dort eine relativ geringe Wärmeleistung ausgestrahlt wird.

In einer konkreten Ausgestaltung gemäß der untersten Darstellung von Fig. 10 beträgt die Messzeit für eine Fahrradfelge als Fahrradkomponente insgesamt weniger als 1 Minute und in einem konkreten Fall für beide Seiten mit zwei Frequenzen insgesamt weniger als 1 Minute und konkret etwa 40 Sekunden. Die Messzeit hängt von dem Bauteil und dessen Aufbau ab.

Es ist möglich und bevorzugt, dass eine wellenförmige Variation der Wärmeleistung erfolgt. Möglich ist es aber auch, dass ein getakteter Betrieb der Wärmequellen 60 erfolgt. Dazu können die Wärmequellen 60 (vergleiche Figur 8) beispielsweise getaktet betrieben werden und entweder volle Leistung oder gar keine Wärmeleistung abgeben. Das zeigt in Figur 10 die zweite Kurve 67 der Strahlungsintensität. Der Verlauf der Wärmeleistung kann (nahezu) rechteckförmig sein. Möglich ist es auch, dass ein nahezu rechteckiger oder quaderförmiger Verlauf erreicht wird, wobei eine exponentieller Zunahme und eine exponentielle Abnahme der Wärmeleistung an den jeweiligen Schaltzeitpunkten vorliegen können (vgl. die Darstellung rechts am Ende).

Die oberste Kurve der Wärmeleistung bzw. Strahlungsintensität 67 in Figur 10 zeigt einen dreieckigen Verlauf, bei dem die Leistung linear und kontinuierlich bis zu einem Maximum erhöht wird, während die ausgestrahlte Wärmeleistung danach 10 z.B. linear reduziert wird, bis ein Minimum erreicht wird. Anschließend wird die erste Periode regelmäßig wiederholt, sodass sich der dargestellte dreieckige Verlauf der Wärmeleistung über die Zeit ergibt. Eine Alternative dazu ist z.B. ein sägezahnförmiger Verlauf. Es sind auch andere periodische Verläufe möglich.

Möglich ist es auch, dass eine graduelle Variation (Erhöhung und/oder Verringerung) der Messfrequenz erfolgt.

Es hat sich gezeigt, dass mit geringeren Frequenzen der Variation der Wärmeleistung größere Wandstärken detaillierter aufgelöst werden können, während mit einer höheren Frequenz der Veränderung der Wärmeleistung dünnere Wandstrukturen höher aufgelöst analysiert werden können.

Bevorzugt wird eine sinusförmige Variation der Strahlungsintensität der Wärmequellen eingestellt, wobei die Intensität bei 0 startet, ein Maximum erreicht und bei 0 wieder ankommt (etc.). Das kann als eine vollständige Periode (Prüfintervall) definiert werden. Es handelt sich dann praktisch um eine um 90° verschobene Sinusfunktion. Der Sinus beginnt im Minimum (-90° Phasenlage) und endet im Minimum (mathematisch bei 270° Phasenlage).

Es werden vorzugsweise mehrere Messperioden aneinander gereiht pro Frequenzbereich oder Frequenz verwendet werden.

Die Aufnahme der Wärmebilder kann in allen Ausgestaltungen auch kontinuierlich oder quasikontinuierlich erfolgen. Das daraus abgeleitete (endgültige) Bewertungsbild repräsentiert über der Oberfläche der Fahrradkomponente aufgelöst die Wärmeverteilung. So kann eine Vielzahl von Bildern zu unterschiedlichen Phasenlagen der Wärmequellen aufgenommen werden.

Möglich und bevorzugt ist es in allen in allen Ausgestaltungen und Weiterbildungen auch, dass das Bewertungsbild die zeitliche Verzögerung (=Phasenlage) der gemessenen Temperaturschwingung an dem Komponentenkörper der Fahrradkomponente im Verhältnis zur periodischen Variation der Wärmestrahlung der Wärmequellen (etwa Helligkeit) wiedergibt. So ist die zeitliche Verzögerung ein Maß für die lokale Wärmekapazität und damit bei bekannten Materialien der Wandstärke. Eine größere Masse erwärmt sich lokal langsamer, eine dünne Wand oder ein Steg schneller. Lufteinschlüsse, Fremdkörper oder dergleichen verändern das erwartete Bild und können somit detektiert werden.

In Figur 10 sind für eine dünnere Stelle 22 und eine dickere Stelle 23 stark schematisch jeweils Temperaturverläufe 85a, 85b dargestellt. An einer dünneren Stelle 22 breitet sich die einwirkende Wärmestrahlung 67 der Wärmequelle(n) 60 schneller aus und es wird aufgrund der geringen lokalen Wärmekapazität ein höheres lokales Maximum erreicht. Die Phasenverschiebung bzw. der Phasenversatz 86a (zeitlicher Abstand der Maxima oder Minima oder Flanken) ist geringer als an der dickeren Stelle 23, bei der sich ein Temperaturverlauf 85b ergibt. Dieser weist kleinere Maxima und einen größeren Phasenversatz bzw. eine größere Phasenverschiebung 86b zu dem Verlauf der einwirkenden Strahlungsintensität 67 auf.

Solche Auswertungen (Phasenversatz und/oder Abweichung der Maxima) werden ortsaufgelöst über der Oberfläche der Fahrradkomponente durchgeführt. Dazu wird für verschiedene Orte oder Stellen 22, 23 etc. jeweils ein Temperaturverlauf 85a, 85b auf dem Komponentenkörper 9 der Fahrradkomponente 1 ermittelt. Die lokalen Phasenverschiebungen relativ zu dem Verlauf der Strahlungsintensität 67 der Wärmequelle(n) 60 werden berechnet. Solche Auswertungen der Phasenverschiebungen sind recht genau, da Störungen nur selten die Frequenz der Schwankung beeinflussen. Einmalige Einflüsse können bzw. werden automatisch herausgerechnet. Schließlich wird vorzugsweise ein Bewertungsbild (pro Frequenz) abgleitet, bei dem die Intensität der Bildpixel von der lokalen Phasenverschiebung abhängig ist. Eine größere (kleinere) Wandstärke wird durch hellere (dunklere) Farben bzw. höhere Intensitäten repräsentiert oder auch umgekehrt.

Insgesamt stellt die Erfindung eine vorteilhafte Anlage 50 zu Verfügung, um händisch oder gegebenenfalls auch automatisiert die Fertigungsqualität von Fahrradkomponenten 1 zu untersuchen. Dabei ist eine regelmäßige Kontrolle oder sogar die Einzelkontrolle aller Produkte einer Serienfertigung zerstörungsfrei möglich. Durch eine Aufteilung der Oberfläche einer Fahrradkomponente in mehrere Abschnitte oder Teilbereiche kann die Qualität der Messung verbessert und die Geschwindigkeit der Überprüfung vergrößert werden.

**Bezugszeichenliste:**

| | | | |
|---|---|---|---|
| 1 | Fahrradkomponente | 70 | Kamera, Wärmebildkamera |
| 2 | Faserverbundwerkstoff | | |
| 3 | Abschnitt | 71 | Infrarotkamera |
| 4,5 | Teilbereich von 3 | 72 | Kamera |
| 6,7 | Wandstärke | 73 | Filtereinheit |
| 8 | Kodierung, Typangabe | 74 | Spiegelelement |
| 9 | Komponentenkörper | 75 | Bild, Wärmebild |
| 10 | Felge, Fahrradfelge | 76,77 | Bewertungsbild |
| 11, 12 | Felgenseite | 78 | Bildpixel |
| 13 | Felgenboden | 80 | Messvorgang |
| 14 | Felgenbett | 81, 82 | Messabschnitt |
| 15 | Felgenhorn | 83 | Messintervall |
| 16 | Ventilloch | 84 | Messzeitpunkt |
| 17 | Hohlkammer | 85a, 85b | Temperaturverlauf |
| 18 | Speichenloch | 86a,86b | Abstand, Phasenversatz |
| 20,21 | Segment | 90 | Halteeinrichtung |
| 22 | dünnere Stelle | 91 | Aktor |
| 23 | dickere Stelle | 92 | Zufuhreinrichtung |
| 50 | Anlage | 93 | Abfuhreinrichtung |
| 51 | Steuereinrichtung | 94 | Wiegeeinrichtung |
| 52 | Speichereinrichtung | 95 | Kodiereinrichtung, Kodiererkennung |
| 55 | Messeinrichtung | | |
| 56 | Umlenkeinrichtung | 96 | Ausschusslager |
| 56a, 56b | Spiegeleinheit | 100 | Fahrrad |
| 58, 59 | Strahl | 101 | Rad, Vorderrad |
| 60 | Wärmequelle | 102 | Rad, Hinterrad |
| 61 | Strahlungsquelle | 103 | Rahmen |
| 62 | Quarzlampe | 104 | Gabel, Federgabel |
| 63 | Wärmeleistung, Wärmestrahlung | 105 | Hinterraddämpfer |
| | | 106 | Lenker |
| 64 | Frequenz | 107 | Sattel |
| 65 | Frequenzbereich | 109 | Speiche |
| 66 | Frequenzbereich | 111 | Ritzeleinrichtung |
| 67 | Strahlungsintensität | 112 | Tretkurbel |
| 68 | Minimum von 67 | | |

## Patentansprüche

1. Anlage (50) zur Überprüfung der Fertigungsqualität von wenigstens einen Komponentenkörper (9) aufweisenden und als Fahrradfelgen (10) ausgebildeten Fahrradkomponenten (1), umfassend wenigstens eine Steuereinrichtung (51),
wenigstens eine Wärmequelle (60),
und wenigstens eine Kamera (70),
wobei die Wärmequelle (60) dazu ausgebildet und eingerichtet ist, während eines Messvorgangs (80) wenigstens einen Abschnitt (3) der Fahrradkomponente (1) zeitlich gesteuert mit Wärme zu beaufschlagen,
und wobei die Kamera (70) dazu eingerichtet und ausgebildet ist, wenigstens ein ortsaufgelöstes Wärmebild (75) wenigstens eines Teilbereichs (4) des Abschnitts (3) der Fahrradkomponente (1) zu erfassen und auszuwerten, um durch Analyse des Wärmebildes die Fertigungsqualität der Fahrradkomponente (1) zu bestimmen,
**dadurch gekennzeichnet,**
**dass** die Anlage dazu eingerichtet und ausgebildet ist, die Fertigungsqualität von Fahrradfelgen (10) zu untersuchen und wenigstens die Seitenflächen der Fahrradfelgen (10) vollständig zu erfassen und wenigstens eine Umlenkeinrichtung (56) umfasst ist, welche dazu ausgebildet ist, Wärmestrahlung umzulenken, um verschiedene Seiten der Fahrradkomponente simultan zu erfassen.

2. Anlage (50) nach Anspruch 1, wobei die Steuereinrichtung (51) und wenigstens eine Wärmequelle (60) dazu eingerichtet und ausgebildet sind, eine periodisch schwankende/zeitlich gezielt veränderliche Wärmeleistung (63) abzugeben und wobei die Steuereinrichtung (51) dazu eingerichtet und ausgebildet ist, in dem Messvorgang (80) wenigstens zwei Messabschnitte (81, 82) durchzuführen, wobei die Wärmeleistung (63) in den beiden Messabschnitten (81, 82) in zwei unterschiedlichen Frequenzbereichen (65, 66) abgegeben wird, wobei einer der Frequenzbereiche (65) geringere Frequenzen aufweist als der andere Frequenzbereich (66).

3. Anlage (50) nach einem der vorhergehenden Ansprüche, wobei wenigstens eine Kamera (70) ortsaufgelöste Sensoren umfasst, die insbesondere in Zeilen und/oder Spalten angeordnet sind und wobei die Kamera (70) im infraroten Strahlungsbereich lichtempfindlich ist.

4. Anlage (50) nach einem der vorhergehenden Ansprüche, wobei während des Messvorgangs (80) eine Vielzahl von Bildern (75) aufgenommen und daraus ein Bewertungsbild (76, 77) abgeleitet wird und wobei wenigstens das Bewertungsbild (76, 77) in einer Speichereinrichtung (52) abgelegt und der Fahrradkomponente (1) eindeutig zugeordnet wird.

5. Anlage (50) nach einem der vorhergehenden Ansprüche, wobei die Steuereinrichtung (51) dazu eingerichtet und ausgebildet ist, Wärmebilder zu Zeitpunkten (53, 54) aufzunehmen, wenn die Strahlungsintensität (67) der Wärmequelle (60) geringer ist als eine durchschnittliche Strahlungsintensität (68) während des Messvorgangs (80) oder eines Messabschnitts (81, 82) des Messvorgangs (80) und wobei in dem Bewertungsbild (77) eine ortsaufgelöste lokale Wandstärke (6) der Fahrradkomponente (1) durch eine Intensität des Bildpixels (78) repräsentiert wird.

6. Anlage (50) nach einem der vorhergehenden Ansprüche,
umfassend wenigstens eine Umlenkeinrichtung (56) zur Lenkung von Wärmestrahlung von der Wärmequelle (60) auf den Komponentenkörper (9)
und/oder umfassend wenigstens eine Umlenkeinrichtung (56) zur Lenkung von Wärmestrahlung von dem Komponentenkörper (9) auf die Kamera (72).

7. Anlage (50) nach einem der vorhergehenden Ansprüche, wobei eine Halteeinrichtung (90) für die Fahrradkomponente (1) umfasst ist, um die Fahrradkomponente (1) für den Messvorgang (80) definiert aufzunehmen und wobei wenigstens ein Aktor (91) umfasst ist, mit dem die Fahrradkomponente (1) automatisch positionierbar ist
und mit dem die Fahrradkomponente (1) in verschiedene Stellungen positionierbar ist, um unterschiedliche Bereiche der Fahrradkomponente (1) zu erfassen und wobei eine Zufuhreinrichtung (92) und eine Abfuhreinrichtung (93) für Fahrradkomponenten (1) umfasst sind und wobei eine Wiegeeinrichtung (94) zugeordnet ist, um ein Gewicht der Fahrradkomponente (1) zu erfassen.

8. Anlage (50) nach einem der vorhergehenden Ansprüche, wobei eine Kodiereinrichtung (95) umfasst ist, um die Fahrradkomponente (1) mit einer eindeutigen Kodierung (8) zu versehen und/oder eine Kodierung (8) an der Fahrradkomponente (1) zu erkennen und wobei wenigstens ein Bild (75) ausgewertet wird, um eine Kodierung (8) zu erkennen und die Fahrradkomponente (1) eindeutig zu identifizieren.

9. Verfahren zum Überprüfen der Fertigungsqualität von als Fahrradfelgen (10) ausgebildeten Fahrradkomponenten (1), wobei mit wenigstens einer Wärmequelle (60) wenigstens ein Abschnitt (3) der Fahrradkomponente gezielt mit Wärme versorgt wird,
und wobei mit wenigstens einer Kamera (70) wenigstens ein Wärmebild (75) wenigstens eines Teilbereichs (4) des Abschnitts (3) der Fahrradkomponente (1) aufgenommen wird,
und wobei das Wärmebild (75) ausgewertet wird, um eine Fertigungsqualität der Fahrradkomponente (1) zu ermitteln,
wobei die Fertigungsqualität der Fahrradfelgen (10) untersucht wird und wenigstens die Seitenflächen der Fahrradfelgen (10) vollständig erfasst werden, wobei mit einer Umlenkeinrichtung (56) Wärmestrahlung umgelenkt wird, um verschiedene Seiten der Fahrradfelgen (10) (1) simultan zu erfassen.

10. Verfahren nach dem vorhergehenden Anspruch, wobei der Abschnitt (3) der Fahrradkomponente (1) mit einer periodisch veränderlichen Wärmeleistung (63) beaufschlagt wird und wobei der Abschnitt (3) der Fahrradkomponente (1) mit einer periodisch veränderlichen Wärmestrahlung (63) in einem ersten Frequenzbereich (65) und anschließend in einem zweiten unterschiedlichen Frequenzbereich (66) bestrahlt wird und wobei periodisch Wärmebilder (75) aufgenommen und zwischengespeichert werden und wobei aus den Wärmebildern (75) ein Bewertungsbild (76, 77) für die Fertigungsqualität der Fahrradkomponente (1) abgeleitet wird.

11. Verfahren nach einem der beiden vorhergehenden Ansprüche, wobei ortsaufgelöste Temperaturverläufe (85, 86) auf dem Komponentenkörper (9) der Fahrradkomponente (1) ermittelt werden und zugeordnete Phasenverschiebungen (86a, 86b) der zugehörigen Temperaturverläufe (85a, 85b) zu dem Verlauf der Strahlungsintensität (67) der Wärmequelle (60) ermittelt werden und wobei in dem Bewertungsbild (76, 77) eine lokale Wandstärke (6, 7) der Fahrradkomponente durch eine Intensität des Bildpixels (78) repräsentiert wird.

## Claims

1. A system (50) for examining the production quality of bicycle components (1) having at least one component body (9) and designed as bicycle rims (10),
comprising at least one control device (51),
at least one heat source (60),
and at least one camera (70),
wherein the heat source (60) is designed and configured to apply heat to at least one section (3) of the bicycle component (1) in a time-controlled manner during a measuring process (80),
and wherein the camera (70) is configured and designed to capture and evaluate at least one spatially resolved thermal image (75) of at least one subsection (4) of the section (3) of the bicycle component (1) in order to determine the production quality of the bicycle component (1) by analyzing the thermal image,
**characterized in**
**that** the system is configured and designed to examine the production quality of bicycle rims (10) and to completely capture at least the side surfaces of the bicycle rims (10), and at least one deflecting device (56) is comprised which is designed to deflect heat radiation in order to simultaneously capture different sides of the bicycle component.

2. The system (50) according to claim 1, wherein the control device (51) and at least one heat source (60) are configured and designed to emit a thermal output (63) which is periodically fluctuating/varying in a time-controlled manner, and wherein the control device (51) is configured and designed to perform at least two measuring sections (81, 82) in the measuring process (80), wherein the thermal output (63) is emitted in the two measuring sections (81, 82) in two different frequency ranges (65, 66), wherein one of the frequency ranges (65) has lower frequencies than the other frequency range (66).

3. The system (50) according to any one of the preceding claims, wherein at least one camera (70) comprises spatially resolved sensors which are arranged in particular in rows and/or columns, and wherein the camera (70) is light-sensitive in the infrared radiation range.

4. The system (50) according to any one of the preceding claims, wherein a plurality of images (75) is taken during the measuring process (80) and an evaluation image (76, 77) is derived therefrom, and wherein at least the evaluation image (76, 77) is stored in a memory device (52) and is unambiguously assigned to the bicycle component (1).

5. The system (50) according to any one of the preceding claims, wherein the control device (51) is configured and designed to capture thermal images at points in time (53, 54) when the radiation intensity (67) of the heat source (60) is lower than an average radiation intensity (68) during the measuring process (80) or a measuring section (81, 82) of the measuring process (80), and wherein a spatially resolved local wall thickness (6) of the bicycle component (1) is represented in the evaluation image (77) by an intensity of the image pixel (78).

6. The system (50) according to any one of the preceding claims,
comprising at least one deflecting device (56) for directing heat radiation from the heat source (60) to the component body (9),
and/or comprising at least one deflecting device (56) for directing heat radiation from the component body (9) to the camera (72).

7. The system (50) according to any one of the preceding claims, wherein a holding device (90) for the bicycle component (1) is comprised in order to accommodate the bicycle component (1) in a defined manner for the measuring process (80), and wherein at least one actuator (91) is comprised with which the bicycle component (1) can be positioned automatically and with which the bicycle component (1) can be positioned in different positions in order to capture different regions of the bicycle component (1), and wherein a feeding device (92) and a delivery device (93) for bicycle components (1) are comprised, and wherein a weighing device (94) is assigned in order to capture a weight of the bicycle component (1).

8. The System (50) according to any one of the preceding claims, wherein an encoder (95) is comprised in order to provide the bicycle component (1) with a unambiguous coding (8), and/or to recognize a coding (8) on the bicycle component (1), and wherein at least one image (75) is evaluated in order to recognize a coding (8) and to unambiguously identify the bicycle component (1).

9. A method for examining the production quality of bicycle components (1) designed as bicycle rims (10), wherein by means of at least one heat source (60), heat is supplied to at least one section (3) of the bicycle component in a targeted manner,
and wherein by means of at least one camera (70), at least one thermal image (75) of at least one subsection (4) of the section (3) of the bicycle component (1) is captured,
and wherein the thermal image (75) is evaluated to determine a production quality of the bicycle component (1),
wherein the production quality of the bicycle rims (10) is examined and at least the side surfaces of the bicycle rims (10) are completely captured, wherein heat radiation is deflected by a deflecting device (56) to simultaneously capture different sides of the bicycle rims (10) (1).

10. The method according to the preceding claim, wherein a periodically varying thermal output (63) is applied to the section (3) of the bicycle component (1), and wherein the section (3) of the bicycle component (1) is irradiated with periodically varying heat radiation (63) in a first frequency range (65) and subsequently in a second, different frequency range (66), and wherein thermal images (75) are periodically captured and temporarily stored, and wherein an evaluation image (76, 77) for the production quality of the bicycle component (1) is derived from the thermal images (75).

11. The method according to any one of the two preceding claims, wherein spatially resolved temperature profiles (85, 86) on the component body (9) of the bicycle component (1) are determined and assigned phase shifts (86a, 86b) of the associated temperature profiles (85a, 85b) with respect to the course of the radiation intensity (67) of the heat source (60) are determined, and wherein a local wall thickness (6, 7) of the bicycle component is represented in the evaluation image (76, 77) by an intensity of the image pixel (78).

## Revendications

1. Installation (50), destinée à vérifier la qualité de fabrication d'un composant (1) de bicyclette comportant au moins un corps (9) de composant et conçu sous la forme d'une jante (10) de bicyclette,
comprenant au moins un système de commande (51),
au moins une source de chaleur (60),
et au moins une caméra (70),
la source de chaleur (60) étant conçue et configurée pour exposer à une chaleur de manière commandée dans le temps pendant un processus de mesure (80) au moins une partie (3) du composant (1) de bicyclette,
et la caméra (70) étant configurée et conçue pour détecter et évaluer au moins une image (75) par rayonnement thermique à résolution spatiale d'au moins une zone partielle (4) de la partie (3) du composant (1) de bicyclette, pour déterminer par analyse de l'image par rayonnement thermique la qualité de fabrication du composant (1) de bicyclette,
**caractérisé en ce que**
l'installation est configurée et conçue pour examiner la qualité de fabrication de jantes (10) de bicyclettes et pour détecter totalement au moins les surfaces latérales des jantes (10) de bicyclettes et **en ce qu'**au moins un système de renvoi (56) est compris, lequel est conçu pour renvoyer un rayonnement thermique, pour détecter simultanément différentes faces du composant de bicyclette.

2. Installation (50) selon la revendication 1, le système de commande (51) et au moins une source de chaleur (60) étant configurés et conçus pour délivrer une puissance thermique (63) variable, périodiquement fluctuante / de manière ciblée dans le temps et le système de commande (51) étant configuré et conçu pour procéder pendant le processus de mesure (80) à au moins deux portions (81, 82) de mesure, la puissance thermique (63) dans les deux portions (81, 82) de mesure étant délivrée à deux plages de fréquence (65, 66) différentes, l'une (65) des plages de fréquence présentant une fréquence moindre à celle de l'autre plage de fréquence (66).

3. Installation (50) selon l'une quelconque des revendications précédentes, au moins une caméra (70) comprenant des capteurs à résolution spatiale, qui sont placés notamment en lignes et / ou en colonnes et la caméra (70) étant photosensible dans la plage de rayonnement infrarouge.

4. Installation (50) selon l'une quelconque des revendications précédentes, pendant le processus de mesure (80), une pluralité d'images (75) étant enregistrée et à partir de celles-ci étant dérivée une image d'évaluation (76, 77) et au moins l'image d'évaluation (76, 77) étant sauvegardée dans un système de mémoire (52) et univoquement affectée au composant (1) de bicyclette.

5. Installation (50) selon l'une quelconque des revendications précédentes, le système de commande (51) étant configuré et conçu pour enregistrer des images thermiques à des moments (53, 54) auxquels l'intensité (67) de rayonnement de la source de chaleur (60) est plus faible qu'une intensité de rayonnement (68) moyenne pendant le processus de mesure (80) ou une portion (81, 82) de mesure du processus de mesure (80) et dans l'image d'évaluation (77), une épaisseur de paroi (6) locale à résolution spatiale du composant (1) de bicyclette étant représentée par une intensité du pixel d'image (78).

6. Installation (50) selon l'une quelconque des revendications précédentes,
comprenant au moins un système de renvoi (56), destiné à guider un rayonnement thermique de la source de chaleur (60) sur le corps (9) de composant
et / ou comprenant au moins un système de renvoi (56), destiné à guider un rayonnement thermique du corps (9) de composant sur la caméra (72).

7. Installation (50) selon l'une quelconque des revendications précédentes, pour recevoir de manière définie le composant (1) de bicyclette pour le processus de mesure (80) étant compris un système de maintien (90) pour le composant (1) de bicyclette, et au moins un actionneur (91) étant compris, à l'aide duquel le composant (1) de bicyclette est automatiquement positionnable et à l'aide duquel le composant (1) de bicyclette est positionnable dans plusieurs positions, pour détecter différentes zones du composant (1) de bicyclette et un système d'amenage (92) et un système d'évacuation (93) pour des composants (1) de bicyclette étant compris et un système de pesage (94) étant affecté, pour détecter un poids du composant (1) de bicyclette.

8. Installation (50) selon l'une quelconque des revendications précédentes, un système de codage (95) étant compris, pour munir le composant (1) de bicyclette d'un codage (8) univoque et / ou pour reconnaître un codage (8) sur le composant (1) de bicyclette et au moins une image (75) étant évaluée, pour reconnaître un codage (8) et pour identifier de manière univoque le composant (1) de bicyclette.

9. Procédé, destiné à vérifier la qualité de fabrication de composants (1) de bicyclette conçus sous la forme de jantes (10) de bicyclettes,
à l'aide d'au moins une source de chaleur (60), au moins une partie (3) du composant de bicyclette étant alimentée de manière ciblée avec de la chaleur
et à l'aide d'au moins une caméra (70) étant enregistrée au moins une image thermique (75) d'au moins une zone partielle (4) de la partie (3) du composant (1) de bicyclette
et l'image thermique (75) étant évaluée, pour déterminer une qualité de fabrication du composant (1) de bicyclette,
la qualité de fabrication des jantes (10) de bicyclettes étant examinée et au moins les surfaces latérales des jantes (10) de bicyclette étant totalement détectées, à l'aide d'un système de renvoi (56), un rayonnement thermique étant renvoyé, pour détecter simultanément différentes faces des jantes (10) (1) de bicyclettes.

10. Procédé, selon la revendication précédente, la partie (3) du composant (1) de bicyclette étant exposée à une puissance thermique (63) périodiquement variable et la partie (3) du composant (1) de bicyclette étant irradiée avec un rayonnement thermique (63) périodiquement variable dans une première plage de fréquences (65) et par la suite, dans une deuxième plage de fréquences différente (66) et des images thermiques (75) périodiques étant enregistrées et temporairement mémorisées et à partir des images thermiques (75) étant dérivée une image d'évaluation (76, 77) pour la qualité de fabrication du composant (1) de bicyclette.

11. Procédé selon l'une quelconque des deux revendications précédentes, des courbes de températures (85, 86) à résolution spatiale étant déterminées sur le corps (9) de composant du composant (1) de bicyclette et des décalages de phase (86a, 86b) des courbes de températures (85a, 85b) associées par rapport à la courbe de l'intensité de rayonnement (67) de la source de chaleur (60) étant déterminés et dans l'image d'évaluation (76, 77), une épaisseur de paroi (6, 7) locale du composant de bicyclette étant représentée par une intensité du pixel d'image (78).
